(19) Europäisches Patentamt
European Patent Office
Office européen des brevets

(11) EP 1 168 663 A2

(12) EUROPEAN PATENT APPLICATION

(43) Date of publication:
**02.01.2002 Bulletin 2002/01**

(51) Int Cl.7: **H04B 7/185**

(21) Application number: **01113501.9**

(22) Date of filing: **11.06.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **19.06.2000 US 596683**

(71) Applicant: **TRW Inc.**
**Redondo Beach, California 90278 (US)**

(72) Inventors:
- **Nivens, Dennis A.**
  **Hermosa Beach, CA 90254 (US)**
- **Wright, David A.**
  **Hermosa Beach, CA 90254 (US)**

(74) Representative: **Schmidt, Steffen J., Dipl.-Ing.**
**Wuesthoff & Wuesthoff, Patent- und Rechtsanwälte, Schweigerstrasse 2**
**81541 München (DE)**

# (54) Comprehensive system and method for uplink power control in a satellite communication system

(57) A comprehensive system and method for uplink power control in a satellite communication system is provided. Power leveling is used to determine a reference uplink transmission power level. That is, the power of uplink signals received by a satellite (140) from a terminal (110) is compared to a power threshold. The transmission power of the uplink signals is then adjusted up or down based on the comparison of the received power with the threshold. Preferably, the power comparison is accomplished using synch bursts. Error leveling is then used to determine a traffic burst uplink transmission power level. That is, once the terminal (110) begins transmitting data using a channel (103), the error rate of the data in the channel (103) is compared to a threshold error rate and the transmission power of the uplink signals is then adjusted up or down based on the comparison. Threshold leveling is then used to evaluate the power threshold. That is, periodically, the reference uplink transmission power level and the traffic burst uplink transmission power level of the channels of the terminals (1101-1105) are compared. The power threshold is then controlled based on the comparison of the reference and traffic burst uplink transmission power levels.

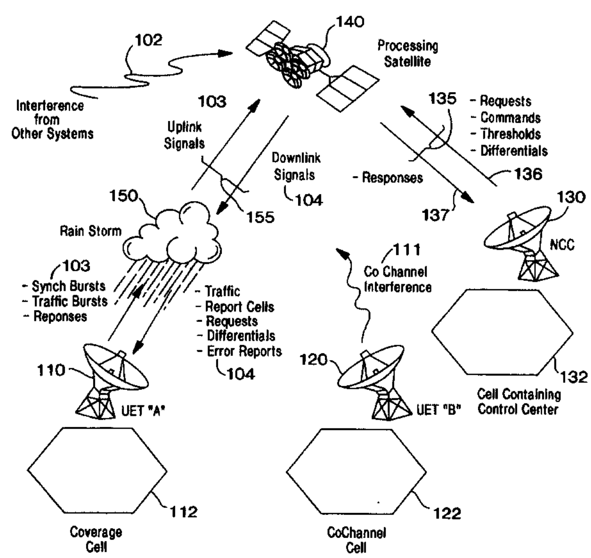


FIG. 1

100

EP 1 168 663 A2

## Description

### BACKGROUND OF THE INVENTION

The present invention generally relates to satellite communication systems. In particular, the present invention relates to controlling the uplink power in a satellite communication system.

Satellites have long been used to provide communication services to large regions of the globe. Historically, communication satellites have used frequencies in the range - of 3 to 10 GHz (C or Ku band) to produce an antenna beam which covers a large portion of a continent. Modern satellites may operate at frequencies of 20 to 30 GHz (Ka band) to produce a beam which may cover an area (or "cell") with a diameter of 300 to 400 miles. Many such cells may be needed to provide communications to a region which previously may have been serviced by a single antenna beam. A modern cellular communication satellite may employ many antennas to generate a large number of beams used for transmitting downlink signals to, and receiving uplink signals from, various User Earth Terminals (UET) distributed over the surface of the earth.

In order for communication to occur on the uplink, signals generated by the UET must be of sufficient power to be received by the satellite. Thus, the antenna gain of the satellite's uplink antenna coupled with the transmission power of the UETs must be sufficient to allow communication to occur. Typically, communication satellite systems are designed with a predetermined, fixed satellite uplink antenna gain. Thus, the transmission power of the UET is typically controlled to enable and ensure communication.

In practice, several factors exists which may negatively impact the uplink communication channel. That is, certain undesired influences may cause the actual antenna gain to vary from the predetermined, designed antenna gain or may cause attenuation of, or interference with, a signal transmitted by a UET. For example, antenna gain may be affected by gain roll-off which may cause the antenna gain to vary spatially over the cell or, alternatively, antenna gain may vary over the cell as a result of pointing errors in the antenna. Atmospheric attenuation, also known as "rain loss," or interference among several UETs, also known as Co-Channel Interference (CCI), may also affect the quality of a signal transmitted from a UET. Each of these conditions, gain roll-off, antenna pointing errors, atmospheric attenuation, and CCI is further discussed below.

#### 1) Gain Roll-Off

The pattern of cells on the surface of the earth is known as the cellular pattern of the satellite communication system. The cellular pattern in a modern satellite communication system may be defined on the surface of the earth such that the maximum gain of a satellite antenna beam is directed toward the center of its assigned cell. The boresight of a satellite antenna beam may be defined as the maximum gain point in the satellite antenna beam, and is typically directed to the center of a cell. The edge of a cell may be defined by determining the angular deviation from the antenna boresight at which the gain of the antenna beam drops to a predetermined value below the maximum gain value, typically at least 3 dB below the maximum gain value. The decrease in antenna beam gain with increasing angular deviation from boresight is known as gain roll-off. In terms of uplink power, a communications signal which is transmitted to the satellite from a UET located at the edge of a cell may be received by the satellite antenna with a gain which is at least 3 dB lower than the gain of a signal which is transmitted from a UET located at the antenna boresight, or center of the cell. Thus, the transmission power level of a terminal located at the edge of a cell must be at least 3 dB higher than that of a terminal located at the center of a cell in order to achieve the same level of performance. In other words, if the edge of a cell is defined as the angle from boresight at which the satellite antenna gain has decayed to 3dB below the maximum antenna gain at the boresight, a UET at the edge of the cell may use a transmission power level 3dB higher than a UET at the center of the cell in order to compensate for the reduced antenna gain at the edge of the cell. By transmitting at the 3dB higher transmission power level, the signal from the UET at the edge of the cell may be received at the satellite with a power that is approximately equal to the power of a signal from the UET at the center of the cell. In order to simplify and reduce the cost of uplink components installed on the satellite, it is desirable to maintain a similar received power level for each UET in the cell. Thus, it is desirable to modify the transmission power of each UET in the cell to compensate for any reduction in the antenna gain at each UET resulting from the UET's position within the cell.

#### 2) Antenna Pointing Errors

In practice, the antenna beams of a cellular communication satellite are generally not directed precisely toward the centers of their assigned cells. Slight mis-orientations of the antenna boresights and deviations from a perfectly circular, zero-inclination satellite orbit give rise to pointing errors. These pointing errors may cause the location of the maximum gain of an antenna beam to deviate from the cell center. Some pointing errors may also cause the maximum gain of an antenna beam pattern to change measurably over the course of a day. In other words, the antenna beam gain distribution across the cell may change with time.

The antenna beam gain at the edge of a cell typically rolls off rapidly as the distance from the center of the cell increases, that is, as the angular deviation from boresight increases. Thus, a pointing error corresponding to only 10% of a cell diameter may cause the antenna beam gain at the edge of a cell to vary by 2 dB or more. Because it is desirable to maintain a similar received power for each UET in the cell, it is desirable to adjust the transmission power of each UET in the cell to compensate for antenna beam pointing errors.

3) Atmospheric Attenuation

Achieving satisfactory communication performance for a signal transmitted from a UET to a satellite generally depends upon receiving a requisite level of signal power at the satellite. That is, each user terminal must transmit a signal with sufficient power to be received. The relationship between the power of the signal transmitted by the terminal and the power of the signal received by the satellite receiver depends in part upon the amount of attenuation of the signal as it passes through the earth's atmosphere. At Ka-band frequencies, the amount of atmospheric attenuation varies considerably as meteorological parameters and weather patterns change. In particular, the occurrence of rain has a pronounced effect on the attenuation of a Ka-band communication signal. The attenuation of the communication signal is known as rain loss or rain fade, although other meteorological phenomena may also provide attenuation. Such atmospheric conditions and/or weather patterns may change rapidly and may vary among different UETs in a cell depending upon the UET's position within the cell. Because it is desirable to maintain a similar received power for each UET in the cell, it is desirable to adjust the transmission power of each UET in the cell to compensate for the attenuation experienced by the UET's signal due to rain loss.

4) Co-Channel Interference

Immediately adjacent cells in a cellular satellite communication system typically use different frequencies for transmitting signals. However, non-adjacent cells may use the same frequency. Such frequency re-use among cells within a cellular pattern serves to reduce the overall frequency bandwidth necessary for the satellite communication system. However, imperfections in satellite antenna beams such as, for example, sidelobe generation, may cause signals transmitted from a UET located in a first cell to be received by a satellite antenna beam which is assigned to receive signals from UETs located in a second cell which uses the same frequency as the first cell. Signals transmitted by UETs located in different cells but using the same frequency may thus interfere with each other, and may cause degraded communication performance. That is, a desired signal received by the satellite from a first UET may be interfered-with by signals from other UETs in other cells using the same frequency as the first UET. The interference from the other UETs may interfere with the desired signal and may adversely affect the performance of the communication system. The interference from other UETs is often referred to at Co-Channel Interference (CCI).

The ratio of the signal power received from the desired UET to the background noise is known as the signal-to-background ratio (SBR). The number of errors in a data signal received from a UET at a satellite (i.e., the error count) may be impacted by SBR. The background noise may include thermal and other noise sources as well as interference sources such as interference from other UETs using the same frequency. In order for the satellite to receive a signal from a particular UET, the transmission power of the UET must be sufficient to provide at least a certain desired minimum SBR. As the background portion of the SBR increases with increasing CCI, the signal portion of the SBR is also increased to maintain the desired SBR. That is, the UET of interest transmits with increased transmission power to maintain the desired SBR in light of the increasing interference from other UETs. However, increasing the transmission power of the UET of interest raises the background level for the other UETs. The other UETs, also seeking to maintain the desired SBR, in turn respond by raising their transmission powers. The UET of interest may react by further increasing its power, and so on until all terminals in the system are operating at the maximum transmission power. This phenomenon is known as system runaway.

Satellite systems have been proposed that attempt to address the problem of system runaway by establishing a single, constant transmission power level for each UET. These proposed systems contemplated using frequencies in the range of 3 to 10 GHz (C or Ku band). Maintaining a constant power for each UET may be acceptable at Ku or C band frequencies in some cases. However, at higher, Ka-band frequencies (20-30 GHz), for example, attenuation alone may cause the power of the received signals at the satellite to vary over a range of 20 dB or more. A comparable dynamic range would be required of the satellite demodulator, which would have a dramatic impact on system complexity and cost. Additionally, such a system would produce a high degree of CCI and increased power consumption. Because of the high CCI, the maximum tolerable interference level from other UETs would unduly limit the number of UETs that may be used, and system capacity would be needlessly limited. Therefore, it is desirable to maintain satisfactory communication performance (typically, maintain a desired SBR and/or a desired error count) while preventing system runaway.

Additional complexity arises in an uplink power control system with regard to UETs which transmit data intermittently rather than continuously, or whenever a UET first establishes a communication channel for transmission to the satellite. When a UET initiates a transmission, the UET may be forced to send an uplink signal into an attenuation and interference environment substantially unknown to the UET. That is, the UET may not be able to transmit initially with a transmission power that provides the desired SBR while not providing needless CCI to other UETs using the same frequency. If the initial transmission power is set too low, the signal may not be received by the satellite. If the initial transmission power is set too high, it may add a disproportionate amount of CCI and degrade the quality (adversely impact the SBR) of other uplink signals in the system.

U.S. Patent No. 4,910,792, entitled "Up-link Power Control in Satellite Communications System" ( the '792 patent) illustrates one approach for controlling uplink transmission power to compensate for rain attenuation. The '792 patent illustrates a system including a number of user stations 59, a reference earth station 58, and a satellite 50, identified at column 1, lines 41-43, which is "a mere repeater of signals, but has no facility to measure the power transmitted from each earth station." In operation, the transmission power of a reference signal transmitted from the reference earth station 58 is adjusted so that the received reference signal at the satellite is constant. Each user station 59 transmits a signal which is relayed to the satellite and back to the user station 59. Each of the earth stations 59 then detects the difference between the received reference signal from the reference earth station through the satellite and the level of the received signal with was sent from itself and relayed by the satellite. Each of the earth stations 59 then adjusts its uplink power based on the difference between the signals. That is, the '792 patent assumes that the reference burst 60 from the reference station 59 is received by the user station 59 with attenuation only on the downlink, while the burst 61 sent from the user station 59 is received at the user station 59 with the attenuation on both the uplink and downlink. Therefore, the difference between the received reference burst signal 60, and the user station burst 61 sent from the user station itself is the attenuation 62 in the uplink, as shown in Figure 4(b). The system of the '792 patent applies to systems employing "bent pipe" transponders, which are not present in a processing satellite communication system.

U.S. Patent No. 5,864,547, entitled " Method and System for Controlling Uplink Power in a High Data Rate Satellite Communication System Employing On-Board Demodulation and Remodulation " ( the '547 patent) illustrates another approach for controlling uplink transmission power. In operation, as shown in Figures 1 and 5, a downlink error rate of the data in a downlink data stream is determined based on known data bits transmitted by a satellite and received by a receiving terminal 10. An end-to-end error rate of the uplink data stream and the downlink data stream is then determined based on the number of errors in received data transmitted by a first user terminal 1 to the receiving terminal 10. The error rate of the uplink is then indirectly estimated based on the downlink error rate and the end-to-end error rate with reference to a lookup table. Finally, the power of the uplink is controlled based on the indirect estimate of error rate of the uplink. Thus, the '547 patent relies on an indirect estimate of uplink signal quality using downlink signals. Therefore, errors introduced in the downlink may not be reliably seperable from errors introduced in the uplink. The '547 patent does not determine the uplink error rate directly.

Thus, a need has long existed for a system and method for controlling the uplink power in a satellite communication system. A need has especially existed for such a system and method able to control uplink power in an uplink channel affected by gain roll-off, antenna pointing errors, atmospheric attenuation, and CCI. Additionally, a need has long existed for such a system and method to control initial uplink transmission power. Finally, a need has long existed for a system able to measure an uplink power level or data error rate directly. A need has also long existed for a system and method for controlling the uplink power level dynamically to compensate for a changing interference environment.

## SUMMARY OF THE INVENTION

The preferred embodiment of the present invention provides a comprehensive system and method for uplink power control in a satellite communication system. The power leveling aspect of the preferred embodiment determines an uplink reference transmission power level by comparing the energy level of uplink signals received by a satellite from a terminal to a predetermined energy level threshold. The transmission power level of the uplink signals is then adjusted up or down based on the comparison of the received power with the threshold. Preferably, the energy level comparison is accomplished using synch bursts. Once the terminal begins transmitting data, the error leveling aspect of the preferred embodiment determines a current uplink transmission power level. That is, once the terminal begins transmitting data using a channel, the error rate of the data in the channel is compared to a threshold error rate and the transmission power of the uplink signals is then adjusted up or down based on the comparison. The threshold leveling aspect of the preferred embodiment is then used to evaluate and control the energy level threshold used by the power leveling aspect. That is, periodically, the uplink reference transmission power level and the uplink data transmission power level of the channels of the terminals are compared. The energy level threshold is then controlled based on the comparison of the uplink reference and uplink data transmission power levels.

These and other features of the present invention are discussed or apparent in the following detailed description of the preferred embodiments of the invention.

BRIEF DESCRIPTION OF THE DRAWINGS

Figure 1 illustrates a cellular satellite communications system according to a preferred embodiment of the present invention.

Figure 2 illustrates a simplified block diagram according to a preferred embodiment of the power leveling aspect of the present invention.

Figure 3 illustrates a power leveling system according to a preferred embodiment of the power leveling aspect of the invention.

Figure 4 illustrates a selected power determination module of the synch burst processor according to a preferred embodiment of the power leveling aspect of the present invention.

Figure 5 illustrates exemplary ATM report cells according to a preferred embodiment of the power leveling aspect of the present invention.

Figure 6 illustrates a flow chart according to a preferred embodiment of the power leveling aspect of the present invention.

Figure 7 illustrates a system block diagram of the error leveling control scheme according to a preferred embodiment of the error leveling aspect of the present invention.

Figure 8 illustrates the structure of an error report ATM cell according to a preferred embodiment of the error leveling aspect of the present invention.

Figure 9 is a flow chart illustrating the error-leveling method according to a preferred embodiment of the error leveling aspect of the present invention.

Figure 10 shows a block diagram of the satellite communication system illustrated in Figure I according to a preferred embodiment of the threshold leveling aspect of the present invention..

Figure 11 shows a satellite communication system implementing power threshold leveling for many UETs communicating in a single cell according to a preferred embodiment of the threshold leveling aspect of the present invention..

Figure 12 illustrates a method for power threshold leveling for use in a satellite communication system according to a preferred embodiment of the threshold leveling aspect of the present invention.

Figure 13 illustrates a comprehensive system block diagram showing the inter-operation of the power leveling, error leveling, and threshold leveling aspects of a preferred embodiment of the present invention

DETAILED DESCRIPTION OF THE PREFERRED EMBODIMENTS

A preferred embodiment of the present invention provides a comprehensive system and method for uplink power control in a satellite communication system which includes and synthesizes three interrelated concepts, namely power leveling, error leveling, and threshold leveling. Each of the power, error, and threshold leveling aspects of the preferred embodiment are further discussed below. Additionally, the power leveling concept discussed in connection with the preferred embodiment of the present invention is further described in U.S. Patent application Ser. No. _______________TRW 22-0108 _______________, filed _______________, entitled "Method and System for Controlling Uplink Power In a Satellite Communication System Using Power Leveling", the contents of which are incorporated herein by reference in its entirety. The error leveling concept discussed in connection with the preferred embodiment of the present invention is further described in U.S. Patent application Ser. No. _______________ TRW 22-0106_______________ , filed _______________, entitled "Method and System for Controlling Uplink Power In a Satellite Communication System Using Error Leveling", the contents of which are incorporated herein by reference in its entirety. The threshold leveling concept discussed in connection with the preferred embodiment of the present invention is further described in U.S. Patent application Ser. No. _______________TRW 22-0110_______________, filed _______________, entitled "Method and Apparatus for Controlling a Transmission Power Threshold of a Satellite Communication System", the contents of which are incorporated herein by reference in its entirety.

Figure 1 illustrates a cellular satellite communications system 100 in which a preferred embodiment of the present invention may be employed. The satellite system 100 includes a first User Earth Terminal (UET), UET A 110, a second UET, UET B 120, a Network Control Center (NCC) 130, and a processing satellite 140. Both the UET A 110 and the UET B 120 may be mobile, but are preferably fixed terminals. The NCC 130 is preferably a fixed terminal. The UET A 110 is positioned within a coverage cell 112, the UET B 120 is positioned within a Co-Channel cell 122, and the NCC 130 is positioned within a NCC cell 112.

The UET A 110 and the UET B 120 are preferably linked by, and communicate with each other via, the satellite 140. Both the coverage cell 112 and the Co-Channel cell 122 correspond to individual antenna beams of the satellite 140. Each individual antenna beam of the satellite 104 is preferably directed toward the center of the respective cell, and is assigned to receive signals originating from, and transmit signals directed to, all of the terminals located within that cell.

The satellite communication system preferably uses frequency division multiple access (FDMA) in combination with time division multiple access (TDMA) for allocating available communication resources, such that each terminal within a given cell is assigned a frequency channel and one or more time slots for transmission of uplink signals.

Terminals located in adjacent cells transmit uplink signals using different frequency channels, while terminals in nonadjacent cells may use the same frequency channels. For example, the UET A 110 may use the same frequency channel as the UET B 120 for transmitting uplink signals to the satellite 140. Each channel/slot combination ("chanslot") is assigned to only one terminal in a given cell for transmission of uplink signals, while each terminal may be assigned one or more chanslots. Alternatively, the present invention may be implemented in many other types of satellite communication systems which use code division multiple access (CDMA), FDMA only, TDMA only, or any other combination of CDMA, FDMA, and/or TDMA. A preferred embodiment of the present invention is described in detail below in the context of a TDMA/FDMA system.

In operation, the UET A 110, transmitting inside the coverage cell 112, sends uplink signals to the processing satellite 140 as shown. The uplink signals propagate through free space from the UET A 110 to the satellite 140. As mentioned above, the power of the uplink signals received at the satellite 140 from the UET A 110 may be negatively impacted by several factors including the UET A's 110 location within the coverage cell 112, the presence of an atmospheric event such as a rain storm 150, pointing errors in the orientation of the transmission antenna of the UET A 110 and receiving antenna of the satellite 140, and Co-Channel Interference (CCI) from UET B 120.

Figure 2 illustrates a simplified block diagram 200 of a preferred embodiment of the present invention. The block diagram 200 includes a UET 216 and a satellite 214. The UET 216 includes an uplink transmitter 220 and a downlink receiver 230. The satellite 214 includes an uplink receiver 204, a synchronization processor 206, a power adjustment processor 208 and a downlink transmitter 210.

In operation, the UET 216 periodically transmits a synchronization signal 202 to the satellite 214 via the uplink transmitter 220. The synchronization signal 202 is preferably composed of a predetermined sequence of binary digits and is typically used by the satellite 214 to estimate the timing error of the terminal 216. The synchronization signal 202 is received by the satellite 214 via the uplink receiver 204 and passed to the synchronization processor 206. The synchronization signal 202 and the synchronization processor 206 are further described in U.S. Patent application Ser. No. _______________TRW 205_______________, filed _______________, entitled "Synchronization Method for a Processing Satellite System", the contents of which are incorporated herein by reference.

As described further below, the preferred embodiment of the present invention modifies the synchronization processor 206 so that the received signal is correlated with the predetermined threshold sequence and the total energy level of the received correlated signal is measured. The measured total energy in general includes signal energy, interference, and thermal noise. When the synchronization sequence is of sufficient length (for example, a length of 64), then the contributions to total energy from interference and thermal noise are small compared with the contribution of the signal energy. Thus, the total energy of the correlated signal is approximately that of the signal energy.

The measured total energy value is input to a power adjustment processor 208, where it is compared with a predetermined threshold. The predetermined threshold represents the desired total energy level of the correlated signal, based on a desired communication performance level. The power adjustment processor 208 calculates the difference between the threshold and the measured total energy and determines a power adjustment value. The power adjustment value is then sent from the satellite 214 to the UET 216 via the downlink transmitter 210. The UET 216 receives the downlink signal 212 via the downlink receiver 230. The UET 216 then uses the power adjustment value to adjust the transmission power level of the uplink transmitter 220.

In a first embodiment, the power adjustment value is the numerical value of the difference between the threshold level and the measured total energy. However, such a numerical value may require several bits to implement and thus may require transmission bandwidth that could otherwise be used for data.

In a second embodiment of the present invention, the power adjustment processor 208 located within the satellite 214 determines only whether the measured total energy is greater or less than the desired threshold, rather than the actual numerical value of the difference. The transmission power level of the uplink transmitter 220 may then be raised if the measured total energy is less than the desired threshold or may be lowered if the measured total energy is greater than the desired threshold. In this preferred embodiment, the power adjustment value may be implemented as a single bit, thus minimizing bandwidth usage. The UET 216 may simply receive the single-bit adjustment value and then adjust the transmission power level of the uplink transmitter 220 up or down by a predetermined, fixed increment. The increments are preferably equal for the upward and downward adjustments, but need not be equal.

In a third, preferred embodiment of the present invention, the power adjustment processor 208 determines whether the measured total energy is greater or less than the original desired threshold, as in the preferred embodiment above. Two additional thresholds are also established, one above the original threshold and one below the original threshold. The additional thresholds allow for the uplink power to be adjusted in one of four ways: big-step-up, little-step-up, little-step-down, and big-step-down. That is, first, if the measured total energy is below the original threshold and below the lower additional threshold, the transmission power of the uplink transmitter is adjusted upwards by a relatively large predetermined increment. Second, if the measured total energy is below the original threshold and above the lower additional threshold, the transmission power of the uplink transmitter is adjusted upwards by a smaller predetermined increment. Third, if the measured total energy is above the original threshold and below the upper additional threshold, the transmission power of the uplink transmitter is adjusted downwards by a small predetermined increment. Finally, if the measured total energy is above the original threshold and above the upper additional threshold, the transmission power of the uplink transmitter is adjusted downwards by a larger predetermined increment. As above, the increments are preferably equal for both the upward and downward adjustments, but need not be. Also, the larger predetermined increment is preferably about twice the smaller predetermined increment, but other values may be selected to accommodate the needs of specific communication systems. This embodiment may be implemented with a two-bit power adjustment value. Those skilled in the art will recognize that this embodiment may be scaled to larger numbers of thresholds to provide finer gradations of power control. However, implementing larger numbers of thresholds increases the number of bits required for the power adjustment value.

In a fourth embodiment of the present invention, the power adjustment processor determines the value of the measured total energy relative to a plurality of thresholds as occurs in the third embodiment. However, in the fourth embodiment, the transmission power level of the uplink transmitter 220 is not adjusted up or down unless the measured total energy varies by a predetermined amount from the desired threshold. Thus, a lower threshold below the original threshold and an upper threshold above the original threshold are established. If the measured total energy is above the upper threshold, the transmission power of the uplink transmitter is adjusted downwards by a predetermined increment. If the measured total energy is below the lower threshold, the transmission power of the uplink transmitter is adjusted upwards by a predetermined increment. If the measured energy is between the upper and lower thresholds, the power of the uplink transmitter is not adjusted. This embodiment may also be implemented with a two-bit power adjustment value. Those skilled in the art will recognize that the fourth embodiment may be combined with the third embodiment.

In each embodiment, the present invention provides a closed loop procedure for controlling the power level of an uplink signal using synchronization bursts. The energy level measurement is formed using the same correlated variables that are used to develop an early/late indicator from the synchronization bursts for each terminal. The present invention allows each terminal, whether actively engaged in transmitting data bursts or simply maintaining synchronization in a standby condition, to know the transmission power level needed for a transmitted signal to be received by the satellite. Because the desired transmission power level is known, the terminal is able to transmit data at a sufficient power to be received, even at the start of a data transmission. Although a terminal may transmit data in several chanslots, each of which may experience a unique level of interference, the power leveling process provides a means of ensuring that active transmission in each uplink chanslot may be initiated at a level that is neither so high as to induce undue interference in co-channel beams nor so low as to place the transmission's data content at risk of experiencing an excessive cell loss ratio.

Figure 3 illustrates a power leveling system 300 according to a preferred embodiment of the invention. The power leveling system 300 includes a terminal 310 and a satellite 350. The terminal 310 includes a downlink electronics module 315, a report cell parser 320, an accumulator 325, a digital to analog converter 330, a variable gain amplifier 335, and a high power amplifier 340. The satellite 350 includes a synch burst processor 355, a report cell former 360 and a downlink electronics module 365.

Figure 3 also includes an uplink 370 and a downlink 390. The uplink 370 may be negatively impacted by interference or attenuation as discussed above. For example, a signal transmitted by the terminal 310 to the satellite 350 first experiences a certain gain 372 from the antenna of the earth terminal. The gain of the antenna of the earth terminal may be negatively impacted by, for example, pointing errors as discussed above. The signal may then experience rain fade 374 which may attenuate the signal. The signal then experiences the gain 376 of the satellite antenna, which may also be negatively impacted by pointing errors. The signal may also experience interference from various sources including thermal noise 378, other satellites 382 and from Co-Channel terminals 380 (CCI) as discussed above. In other words, as the synch bursts propagate upwards and reach the satellite 350, they may be subjected to factors that may result in variations in the energy level reaching the satellite's synch burst processor 355. These include the orientation of both the terminal's and the satellite's antennas whose effective gain depends on the precision of aiming. For the satellite antenna, the gain also depends on the location in the beam of the earth terminal. Another variable is the earth's atmosphere which may introduce a significant amount of attenuation due to rain, clouds, or gaseous absorption.

In operation, the terminal 310 periodically sends synchronization bursts to the satellite 350 via the uplink 370.

At the terminal, the synchronization bursts are supplied to the variable gain amplifier 335 and then passed to the high power amplifier (HPA) 340 for transmission to the satellite 350. As the synchronization bursts pass through the uplink 370, they may be affected by the factors shown, (i.e., the earth terminal antenna gain 372, the uplink rain fade 374, the satellite antenna gain 376, thermal noise 378, and interference from other satellites 382 and CCI 380)

The synchronization bursts are sent at predetermined intervals regardless of whether the terminal 310 is in standby mode or is actively transmitting data traffic. In order for the synch bursts to be received by the satellite, the synch bursts must be transmitted at a sufficient power level. In operation, the variable gain amplifier 335 scales the amplitude of the signal it passes to the HPA 340. Because the HPA 340 is preferably a non-scalable amplifier, the scaled amplitude passed to the HPA 340 results in a scaled output power from the HPA 340. The output power of the HPA 340 is sufficient so that the synch burst will be received by the satellite 350 at or near a desired power level. Because of the interference present in the uplink 370, the signal received by the synch burst processor 355 from the terminal 310 includes both a desired signal component and an undesired background component.

In a typical satellite system, user terminals may transmit a short synchronization burst to the satellite every 0.75 seconds. The synchronization burst is of N symbols duration where N is typically 64. The signal structure of the burst is a fixed sequence with structure chosen for its ability to provide reliable time-of-arrival indications. Details of a typical synch burst are further disclosed in various related patent applications, including, U.S. Patent application Ser. No. _______________TRW 205 _______________, filed _______________, entitled "Synchronization Method for a Processing Satellite System", and U.S. Patent application Ser. No. _______________TRW 301 _______________, filed _______________, entitled "Uplink Transmission for a Processing Satellite System," the contents of which are incorporated herein by reference.

The processing of the synch bursts at the satellite 350 to determine an early/late indicator for the synch burst and the structure of the synch burst processor 355 are further disclosed in U.S. Patent application Ser. No. _______________TRW 241_______________ , filed _______________, entitled "Synchronization Burst Processor", the contents of which is incorporated herein by reference. As set forth in the identified application, the synchronization burst processor (SBP) 355 determines early and late correlated responses $R_E$ and $R_L$. The SBP 355 uses N+1 "odd" samples from the inphase and quadrature components of an received synch burst. Odd samples are samples taken at a half time symbol time offset from the point of convergence of the demodulator's eye diagram. In other words, odd samples are offset by half a symbol time from the usual data symbol rate.

The early correlated response, $R_E$, is determined from 64 odd samples offset by a half symbol time ahead. The late correlated response ,$R_L$, is determined from 64 odd samples offset by a half symbol time behind. Thus, because each are offset by half a symbol time, $R_L$ and $R_E$ overlap except as to their earliest and latest samples. Thus, N+1 or 65 odd samples are analyzed to determine $R_L$ and $R_E$. Once $R_L$ and $R_E$ have been determined, the total energy level of the correlated signal may be determined.

Figure 4 illustrates a selected power determination module 400 of the synch burst processor 355 in greater detail, according to a preferred embodiment of the present invention. The power determination module 400 includes an inphase early/late correlator 410, a quadrature early/late correlator 420, a square modulus 430, a power leveling sum and compare module 440, and a timing compare module 450.

In operation, a matched filter (not shown) provides the inphase component of a received synch burst to the inphase early/late correlator 410 and also provides the quadrature component of the received synch burst to the quadrature early/late correlator 420. Both the inphase and quadrature components include N+1 or 65 odd samples. These may be expressed as:

$$\{p_o(n), q_o(n): n = 0 \text{ to } N\}$$

A template t(n) of the synch burst is supplied to both the inphase and quadrature early/late correlators 410, 420 as shown. The inphase and quadrature early/late correlators 410, 420 then correlate the odd samples of the synch burst with the template t(n) to determine an early and late correlation for both the inphase ($P_E$ and $P_L$) and quadrature ($Q_E$ and $Q_L$) components. This may be expressed by the following equations.

$$P_E = \sum_{n=0-63} p_0(n) * t(n) \qquad P_L = \sum_{n=1-64} p_0(n) * t(n-1)$$

$$Q_E = \sum_{n=0-63} q_0(n) * t(n) \qquad Q_L = \sum_{n=1-64} q_0(n) * t(n-1)$$

Once the early and late correlations for both the inphase ($P_E$ and $P_L$) and quadrature ($Q_E$ and $Q_L$) components of the odd samples of the synch burst have been formed, the early and late correlations are passed to the square modulus 430. The square modulus determined the total energy level of the early correlation by squaring and summing the inphase and quadrature components of the early correlation. The total energy level of the late correlation is formed in the same way. This may be expressed in the following equations.

$$R_E^2 = P_E^2 + Q_E^2$$

$$R_L^2 = R_L^2 + Q_L^2$$

The total energy values for the early correlation $R_E^2$ and the late correlation $R_L^2$ are sent to both the timing compare module 450 and the sum and compare module 440. As described in the "Synchronization Burst Processor" application cited above, the timing compare module 450 subtracts $R_E^2$ from $R_L^2$ to form an early/late indicator. However, the preferred embodiment of the present invention also includes the sum-and-compare module 440.

The sum and compare module 440 adds the early and late correlation energy values to form a total energy value of the received synch burst. This may be expressed as

$$E_{TOT} = R_E^2 + R_L^2$$

This total energy value is then compared with a threshold energy value to determine a transmission power adjustment.

The total energy value, $E_{TOT}$, incorporates the energies of both the desired signal and the background. Preferably, the synchronization sequence t(n) is chosen such that its autocorrelation at an offset of one symbol or more is small compared with its autocorrelation at zero offset. Assuming the synchronization process has reduced the timing error of the synch bursts to within one symbol time, the expected value of the total energy determined above may be related to the energy per symbol of the received synch burst by the equation:

$$\langle E_{TOT} \rangle = 2 * N * (\lambda * N * E_s + B_o)$$

Where N is the sequence length, $E_s$ is the energy per symbol in the synch burst, Bo is the combined background spectral density including thermal noise and various forms of interference, and λ is a constant that depends on the type of filter used to shape the symbols. For the preferred embodiment, N is of length 64, and a rectangular Quadrature Phase Shift Keyed (QPSK) filter is employed which yields λ=1/4. Consequently, the above equation simplifies to:

$$\langle E_{TOT} \rangle = 128 * (16 * E_s + B_0)$$

The measured total energy level is thus demonstrated to be strongly dependent upon $E_s$, the energy per symbol of the received synch burst, and weakly dependent on $B_0$, the background power spectral density.

The desired value of $E_s/B_0$ in an operational system may typically be no less than 3 (or 4.8 dB). As an example of the stability of the power leveling process, assigning $E_s$ a value of 3 units and $B_0$ a value of 1 unit yields an expected total energy level of

$$\langle E_{TOT} \rangle = 128 * (16 * 3 + 1) = 6272$$

The value of $B_0$ contributes only about 2 percent to the value of $\langle E_{TOT} \rangle$. In order to maintain a desired $E_s$ value of 3 units when $E_s/B_0$ has a value of 4.8 dB, the threshold used in the sum-and-compare module 440 is preferably assigned a value of 6272.

In practice, the value of $B_0$ is random and may vary significantly over time, for instance, due to varying levels of CCI caused by the geographic distribution of interfering terminals within their cells. Allowing the value of $B_0$ to vary in the extreme by a factor of 2, it is readily apparent by substitution and solving the above equation that changes in the level of $B_0$ have little effect on the power leveling process. For example, allowing $B_0$ to vary from a value of 0.5 units to a value of 2 units causes $\langle E_{TOT} \rangle$ to vary by less than 0.1 dB from the desired value. Thus, the power leveling system responds strongly to factors affecting received synch burst energy such as gain roll-off, pointing error, and atmospheric attenuation, and responds very weakly to changes in the interference level. Because a large increase in interference level actually causes the system to respond by very slightly decreasing the synch burst transmission power, the problem of system runaway is avoided.

As described above, when a synch burst arrives at the SBP 355 with a total energy level higher than the threshold value, a signal may be sent to the user terminal to reduce the transmission power level. Conversely, when a synch burst arrives at the SBP 355 with a total energy level, lower than the threshold value, a signal may be sent to the user terminal to increase the transmission power level.

The threshold level employed by the sum-and-compare module 440 of Figure 4 is independently determined and transmitted to the satellite. Preferably, the threshold is recalibrated at a predetermined, fixed period of approximately one hour. Also, preferably, the re-calibration of the threshold is performed at a Network Control Center (NCC) (not shown) and transmitted by the NCC to the satellite. A system and method for recalibrating the threshold level is further disclosed in U.S. Patent application Ser. No. _______________TRW 357_______________ , filed _______________, entitled "Method and Apparatus for Controlling A Transmission Power Threshold of a Satellite Communication System", the contents of which is incorporated herein by reference.

Referring to Figure 4, once the sum and compare module 440 has determined whether the total energy, $E_{TOT}$, is less than or greater than the desired threshold value, the sum-and-compare module 440 may generate a one-bit hi/low indicator as shown. Alternatively, in the preferred embodiment, as described above, the total energy, $E_{TOT}$, is compared to the desired threshold, an upper threshold, and a lower threshold. The sum and compare module than generates a two-bit hihi/hi/lo/lolo indicator. That is, 1) when the total energy is less than the lower threshold, the lolo indicator is sent, 2) when the total energy is greater than the lower threshold but less than the desired threshold a lo indicator is sent, 3) when the total energy is lower than the upper threshold but greater than the desired threshold a hi indicator is sent, and 4) when the total energy is greater than the upper threshold, the hihi indicator is sent. The one- and two-bit hi/lo indicators are specific to the chanslot of the user terminal's synch burst. Preferably, the hi/lo indicator for a terminal is combined with the synch information for that terminal to form a small report for that terminal. Preferably, the hi/lo indicator comprises two bits and the synch information also comprises two bits, thus yielding a four bit (one nibble) report for each terminal.

Referring to Figure 3, the hi/low indicator is then passed to the report cell former 360. The report cell former 360 packages the nibble report including the hi/low indicator for the terminal into a report cell. The report cell may be implemented in the form of an Asynchronous Transfer Mode (ATM) cell. The nibble report including the hi/low indicator may be packaged in the ATM cell with nibble reports including hi/low indicators for other terminals that may be transmitting synch bursts as further described below. The report cell former 360 then packs the nibble reports for each synch burst slot for the current frame into an ATM cell. The report cell former 360 then passes the ATM cell to the downlink electronics module 365 and then to the downlink module 315 of the terminal 310 as described above. The downlink module 315 passes the ATM cell to the report cell parser 320.

The report cell parser 320 unpackages the ATM cell and determines the hi/low indicator from the report nibble for that specific terminal 310. The hi/low indicator is then passed to the accumulator 325. The accumulator 325 then adjusts the power level of the uplink up or down by a predetermined and supplied step size. For example, in the preferred embodiment of a two-bit hi/lo indicator, the uplink power might be adjusted in a 0.1 to 0.25 dB step size for a hi or lo report and in a .25 to .50 dB step size for a lolo or hihi report. That is, the binary hi/lo indicator is converted to bipolar ($\pm 1$) form and added to a digital value stored in memory at the accumulator 325.

The accumulated digital value is converted to analog form by a D/A converter 330. The conversion factor between the digital value and its analog representation is scaled by the step size parameter in the earth terminal. The analog voltage "Vgain" is used to control the gain of the variable gain amplifier 335 in the terminal's 310 transmitter chain. Preferably, the sense of correction of the gain of the variable gain amplifier is opposite to the error reported by the satellite. That is, if "hi" is reported then the amplifier gain is reduced so that a lower power synch burst is transmitted at the next masterframe.

Figure 5 illustrates exemplary ATM report cells 500 according to a preferred embodiment of the present invention. As described above, the preferred embodiment of the present invention employs a four-bit sample nibble 510 for each user terminal. The sample nibble includes a two-bit early/late timing indicator 512 and a two-bit power indicator 514. The preferred embodiment of the ATM report cells 500 relates to each specific synch burst time slot in a specific uplink frame and reports the results for 175 separate (frequency divided) channels that may be accessed concurrently in the time slot. The ATM report cells 500 are standard 53-byte ATM cells including a five-byte header 515 and a forty-eight-byte body 520.

The header 515 includes ATM addressing (VPI and VCI) to all user terminals located in the satellite communication beam. Each UET monitors all ATM cells that arrive in its downlink. When ATM report cells 500 arrive, the ATM report cells 500 are passed to the UET's report cell parser 320 (Figure 3) for parsing.

The body of each ATM report cell 500 is divided into a four-byte subheader 525 and a 44-byte report field 530. The subheader 525 contains fields to identify the cell as a synch burst report and to specify the uplink frame and the time slot to which the report refers. Since the synch burst report extends over two ATM report cells 500, there is also an indicator in the subheader 525 to differentiate the first and second cell of each report.

The report field of each synch burst ATM report cell 500 consists of two nibbles per byte (88 total in the first cell and 87 in the second). The location of each nibble within the report field is associated with a specific channel number. Because each UET knows the frame, slot, and channel in which its most recent synch burst was transmitted, the UET is able to identify the ATM report cells 500 that are relevant to it by comparing the terminal's frame and slot number to that of the ATM report cell. By comparing the terminal's channel to the ATM report cell 500, the terminal is also able to easily locate the nibble in the ATM report cell that pertains to the terminal's particular channel.

Thus, the preferred embodiment of the present invention enables each terminal in the system, regardless of whether it is actively transmitting traffic bursts or simply maintaining synchronization while in a standby condition, to transmit at a power level that produces a received level at the satellite's synch burst processor which is close to a predetermined threshold value. The preferred embodiment is efficient in its usage of satellite processing resources and also in any overhead requirements that it imposes on the communication resources between the satellite and the terminal. The preferred embodiment is also relatively insensitive to fluctuations in the level of the unwanted background that it experiences in the satellite receiving electronics.

The present invention thus yields the ability to accurately maintain uplink power accurately at a threshold level. In addition, the uplink power control may be fully integrated with the uplink timing reference control as described above. Also, no additional signaling between the terminal and the satellite is required because the present invention employs the synch bursts which are already sent to the satellite. Additionally, the preferred embodiment make efficient use of the synchronization processes and adds minimal new hardware to the satellite.

Additionally, the preferred embodiment is unconditionally stable. System runaway is prevented because, as discussed above, increases in background level result in the terminals lowering, rather than raising, their uplink transmission power. Also, the threshold reference level is easily scalable by uploading a new threshold level to the sum-and-compare module 440 of the satellite. The present invention thus results in reduced interference between UETs within the system as well as between separate communication systems. The reduced interference permits reference levels to be held not far above theoretical minima, resulting in increased reserve margin at the user terminals, for a given HPA level. The reduction in reference level may reduce terminal costs by allowing the use of lower rated HPAs.

Also, the present invention permits the reference power level to be maintained by standby, as well as active, user terminals. Thus, UETs which transmit data intermittently, rather than continuously, or UETs that are first establishing communication, may transmit at a certain desired threshold level. By regulating UET's initial uplink power level, the present invention may reduce CCI.

Figure 6 illustrates a flow chart 600 according to a preferred embodiment of the present invention. First, at step 610, the terminal transmits a synchronization burst. Next, at step 620, the synch burst is received at the satellite and the total energy of the synch burst is determined. Then, at step 630, the total energy of the synch burst is compared to a threshold energy level. At step 640, a hi/lo power adjustment indicator is determined based on the comparison of the total energy of the synch bust to the threshold energy level. At step 650, the power adjustment indicators are packaged into ATM report cells. Next, at step 660, the ATM report cells are broadcast to the terminals. Then, at step 670, the ATM report cell is received and parsed, at the terminal, to determine the hi/lo power adjustment indicator for that terminal. Finally, at step 680, the uplink transmission power is controlled in response to the hi/lo power adjustment indicator.

Referring again to Figure 1, a preferred embodiment of the error leveling aspect of the present invention as applied to the exemplary satellite communication system 100 is now presented. The satellite communication system 100 comprises a processing satellite 140 which includes a satellite-mounted error leveling module (e.g., 701 in Figure 7), a network control center (NCC) 130, and one or more user earth terminals (UETs) 110, 120 located in one or more respective coverage cells 112, 122. Each of the UETs 110, 120 includes a UET-mounted error leveling module (e.g., 702 in Figure 7). Although exemplary Figure 1 illustrates a multibeam satellite 140, the system may use a single-beam satellite.

In the satellite communication system 100 of Figure 1, it is generally desired that the uplink data signal 103 from a transmitting UET 110 to the processing satellite 140 maintain a predetermined level of signal fidelity. Various types of signal fidelity criteria may be applied, such as, for example, the error count (or error rate) or the signal-to-noise ratio (SNR). One preferred signal fidelity criterion is error count or rate.

The error rate is the number of errors per data bit detected by the satellite's error detecting decoder (e.g., 711 in Figure 7), and the error count is the actual number of errors detected in a particular data signal. The error count (and error rate) is generally a function of the UET's transmit power level. The transmit power level refers to the power level at which the UET's uplink transmitter sends an uplink data signal. The transmit power level represents the power of the uplink data signal before the signal is amplified by a high power amplifier (HPA) (e.g., the uplink data signal "X" (726) in Figure 7). However, the transmit power level may alternatively refer to the power level of the uplink data signal at any point in the transmission of the signal (e.g., 722 or 730 in Figure 7).

In order to maintain the error count at a predetermined threshold level, it is desirable for the UET's 10 transmit power level to be sufficiently high to satisfy the error threshold. The error threshold is a predetermined level of signal fidelity and more specifically, it is a predetermined error count. At the same time, the transmit power level is ideally no greater than required. This is primarily because the excess power may increase the amount of co-channel interference experienced by other UETs 120. It is therefore desirable to maintain the error rate for every channel on which the UET 110 is authorized to communicate, at a level that is near the error threshold. In a preferred embodiment, the error threshold may be slightly higher than the theoretical minimum in order to accommodate the inevitable wander in a closed loop tracking procedure.

The satellite communication system preferably uses frequency division multiple access (FDMA) in combination with time division multiple access (TDMA) for allocating available communication resources, such that each terminal within a given cell is assigned a frequency channel and one or more time slots for transmission of uplink signals. Terminals located in adjacent cells transmit uplink signals using different frequency channels, while terminals in non-adjacent cells may use the same frequency channels. For example, the UET "A" 110 may use the same frequency channel as the UET "B" 120 for transmitting uplink signals to the satellite 140. Each channel/slot combination ("chanslot") is assigned to only one terminal in a given cell for transmission of uplink signals, while each terminal may be assigned one or more chanslots. Alternatively, the present invention may be implemented in many other types of satellite communication systems, including systems using code division multiple access (CDMA), only FDMA, only TDMA or any other combination of CDMA, FDMA and/or TDMA. A preferred embodiment of the present invention is described in detail below in the context of an FDMA/TDMA system.

As seen in Figure 1, a UET 110 sends uplink data signals 103 to the processing satellite 140. The error rate of the uplink data signals 103 may be affected by a variety of different factors including, but not limited to, the transmit power level from the transmitting UET 110, co-channel interference (CCI) from other UETs 120 using the same frequency (these other UETs 120 may communicate within the processing satellite system 100 or in adjacent satellite systems), attenuation due to current weather conditions (e.g., precipitation), or gain change due to mispointing of the satellite 140 and/or the antenna of the UET 110.

The satellite 140 receives and processes the uplink data signals 103 transmitted by the UET 110. As explained in further detail below, in processing the uplink data signal 103 sent in a particular chanslot, an error detecting decoder (e.g., 711 of Figure 7) at the satellite 140 determines the number of errors that occurred in the uplink data signal, and corrects those errors. The comparator (e.g., 715 of Figure 7) at the satellite compares the detected number of errors in that uplink data signal to the error threshold, and then generates an error indicator that applies to that chanslot. The satellite then transmits the error indicator to the UET 110 on a downlink 104 (in the same beam as the associated uplink). Based on the error indicator corresponding to the particular chanslot. the UET 110 that is communicating in this chanslot may then adjust its transmit power level for the next uplink data signal which the UET 110 transmits in that chanslot. This error-leveling process generally occurs independently for each chanslot being used by the subject UET 110, as well as for every other UET in the same cell coverage area 112. Generally, all of the error indictors corresponding to every frequency channel in the current time slot (i.e., chanslot) and in the current frame, are transmitted together on the downlink in a comprehensive error data signal referred to as an error report.

Figure 7 shows a system block diagram of a preferred embodiment of an error leveling control scheme 700 of the present invention. The error leveling control scheme 700 includes a satellite-mounted error leveling module 701 and a UET-mounted error leveling module 702. The satellite-mounted error leveling module 701 comprises an uplink receive antenna 729, an uplink receiver 723, an error detector/decoder 711, a comparator 715, an error report circuit 719, a downlink transmitter 703, and a downlink transmit antenna 705. The UET-mounted error leveling module 702 comprises a downlink receive antenna 704, a downlink receiver 706, an error report processor 710, a power profile processor 716, a power mixer 742, a digital-to-analog (D-to-A) converter 744, an uplink transmitter 720, a variable gain amplifier 724, a high power amplifier (HPA) 728, and an uplink transmit antenna 732.

As shown in Figure 7, the error leveling control scheme 700 incorporates a closed loop signal path ("error leveling loop"). By way of example, the closed loop "begins" in the UET-mounted error leveling module 702 where a data signal such as, for example, an ATM traffic cell 718, enters the UET's uplink transmitter 720. The uplink transmitter is a standard uplink transmitter 720 which generally modulates the signal desired to be transmitted and performs an initial amplification of the signal. The modulated signal 722 is then further amplified by a standard variable gain amplifier (VGA) 724. As explained further below, the gain applied by the VGA 724 is determined by the control voltage 746. The control voltage 746 is based on the power offset 734 for the particular chanslot (which, as explained below, is based on an error indicator), the reference power level 738, and a predetermined step size 740.

Because satellite communication systems often experience a great amount of attenuation due to various factors including, but not limited to, unfavorable atmospheric conditions, satellite antenna gain roll off, interference, or mispointing of the satellite and/or the UET antenna, it is often necessary to further amplify the uplink data signal with a high power amplifier (HPA) 728. A HPA 728 generally has a rated power level which is several decibels above the minimum value needed to sustain satisfactory uplink performance. After this final amplification by the HPA 728, the modulated and amplified uplink data signal 731 is radiated upward to the satellite via the uplink transmit antenna 732, at an appropriate power level. It is understood that various methods exist for adjusting the uplink transmission power of a UET, and the present invention is not limited to the specific implementation described herein.

It should be noted that the initial transmit power level of the uplink data signal, "X" (726) (i.e., before the error-leveling loop has completed its first loop), is a predetermined value, which is generally equal to the reference power level 738. This is due to the fact that the initial power offset 734 for any given chanslot, before the error leveling loop has been applied for the first time during a transmission, is generally equal to zero. The reference power level 738 may be, for example, a fixed value stored in memory, or it may be determined via an independent "power leveling loop" of the communication satellite system. The power leveling process that determines, and thereafter maintains, the reference power level 738, is described in detail in a co-pending application entitled "Method And System For Controlling Uplink Power In A Satellite Communication System Using Power Leveling," Serial No. _______________, filed on _______________, which is incorporated herein by reference.

The uplink data signal 731, which is then received by the satellite's uplink receiver antenna 729, generally includes undesired background components including, for example, interference (either intrasystem (e.g., cochannel) interference or intersystem interference from uplinks to other satellites). The uplink data signal 731 is then processed and demodulated by a standard uplink receiver 723. The processing and demodulation of the uplink data signal 731 is generally done in parallel with many other data signals 733, 735, 737 using different chanslots (i.e., signals that are concurrent in time but occupy different frequency channels). As these uplink data signals 731, 733, 735, 737 complete the demodulation process, the demodulated signals 725 are passed to an error detection decoder 711. This error detection decoder 711 (for example, a standard Reed-Solomon decoder) generally removes all errors, and determines the number of errors that were found and corrected by the decoder 711 for each uplink data signal 731, 733, 735, 737. The decoded data signals 707 are then resolved into their constituent downlink signals (e.g., individual ATM cells), and the constituent downlink signals are passed to the satellite's downlink transmitter 703 for transmission on the downlink to their appropriate destinations.

The error count 713 (i.e., the number of errors) determined by the decoder 711 for each of the uplink data signals 731, 733, 735, 737 is passed to a comparator 715. The comparator 715 compares the individual error count for each data signal 731, 733, 735, 737 to an error threshold 721. The error threshold 721 is generally a predetermined, fixed value in the satellite's memory. The error threshold (T) may be any integer value, 0 through t, inclusive, where t is the maximum number of correctable errors for the decoder 711.

Based on the comparison between the error threshold and the error count for each data signal, the comparator 715 outputs one or more 1-bit error indicators 717 to the error report circuit 719. Each individual error indicator corresponds to a given chanslot (specifically, the chanslot in which the corresponding signal was received by the satellite), and indicates whether the error count for that corresponding chanslot is greater than the error threshold or not. For example, if the error count for a given chanslot is greater than the error threshold, the error indicator for that particular chanslot may be "1", indicating that the error count is above the error threshold. Similarly, if the error count for the particular chanslot is less than or equal to the error threshold, the error indicator for that particular chanslot may be equal to "0", indicating that the error count is not above the error threshold. It is noted that this 1/0 convention corresponding respectively to the "above/not above" indications may be reversed. It is further noted that a more complex comparison indicator 717 may be applied in accordance with the present invention. For example, a 3-bit indicator may be used with the example conventions indicated in Table 1 below.

TABLE 1

| INDICATOR | TRANSLATION |
|---|---|
| 000 | C=T |
| 001 | $T<C\leq 1.03(T)$ |
| 010 | $1.03(T) < C \leq 1.06(T)$ |
| 01 | $1.06(T) < C$ |
| 100 | $T>C\geq 0.97(T)$ |

TABLE 1 (continued)

| INDICATOR | TRANSLATION |
|---|---|
| 101 | 0.97(T) > C≥0.94(T) |
| 10 | 0.94(T) > C ≥0.91(T) |
| 11 | 0.91(T)>C |
| *Note: C = error count T = error threshold | |

The error report circuit 719 prepares an error report signal 709 which is sent to the downlink transmitter 703. As explained further below with respect to Figure 8, the error report 709 is generally a single, comprehensive signal that contains the "above/not above" error indicator information corresponding to each of the individual chanslots in a particular frame. Typically, there are 9100 chanslots per frame to be concurrently reported via the error report 709. These chanslots may comprise 175 frequency channels and 52 time slots. The 9100 corresponding error indicators 717 may be packed into a single signal such as, for example (and as specifically described with respect to Figure 8), a set of ATM error report cells.

The error report 709 generated by the error report circuit 719 then enters the downlink 737 (for the same beam as for the associated uplink) via a standard downlink transmitter 703 and a standard downlink transmit antenna 705. The addressing of this error report, as described with respect to Figure 8, is such that every terminal in the cell coverage area of the beam receives the error report (which includes the uplink frame number and slot number to which the error report pertains) via a standard downlink receive antenna 704 and a standard downlink receiver 706. The received error report 708 is then parsed by an error report processor 710.

As explained in detail with respect to Figure 8, the error report processor 710 extracts the uplink frame number and time slot numbers to which the received error report 709 pertains to determine if the UET transmitted a data signal in this frame/slot number. If the terminal did transmit in a frame/slot number indicated in the received error report 708, then the error report processor 710 proceeds to extract the particular "above/not above" indicator bits from the received error report 708 that are associated with the chanslot on which the particular UET transmitted an uplink data signal.

The error report processor 710 then sends the associated above/not above error indicator bits to a power profile processor 716. The power profile processor 716 maintains a data set of current power level offsets for each chanslot in use by the UET. These power level offsets are generally integer values, and they describe the gain difference (in units of "step size") relative to the reference power determined via the power leveling procedure mentioned above (and described in detail in a co-pending application entitled "Method And System For Controlling Uplink Power In A Satellite Communication System Using Power Leveling," Serial No. _______________, filed on _______________, incorporated herein by reference).

For example, if the current reference power level for the particular UET is 10dB, and the power offset for the present chanslot is +2dB, this means that the current power level for this particular chanslot is 7dB above the reference level, or 10dB. If the error indicator is 1, thus indicating that the error rate at the satellite is greater than the error threshold, then the power level is too low, thus resulting in a greater number of errors than desired. Therefore, the power profile processor 716 should update the power offset for this chanslot by a predetermined step amount to an appropriate level. For simplicity, it is assumed that an error indicator of 1 results in a +1dB change in power offset, and an error indicator of 0 results in a - 1 dB change in power offset. Thus, for this example, the power profile processor 716 would update its power profile so that the power offset for this particular chanslot is increased to +3dB. A similar operation is performed for any other chanslot in use by the UET.

Once the power profile is updated as explained above, the updated power profile 734 is sent to a power mixer 742. The power mixer 742 determines the new transmit power level for a particular chanslot by mixing that chanslot's power offset from the updated power profile 734, with the reference power level 738. The power mixer 742 then outputs the new power level output 750 to a digital to analog converter, which generates a control voltage 746, and sends the control voltage 746 to the VGA 724. The UET is now ready to transmit the next data signal (or cell) at the appropriate transmit power level, and the closed error loop of Figure 7 repeats.

It is noted that the +1 dB increase in the transmit power level of the example above may or may not be sufficient to restore the error count of the chanslot to the requisite error threshold level. Generally, the error leveling process of a preferred embodiment of the present invention is continually functioning and thus continually setting the transmit power level of the modulated signal 722 before it enters the HPA 728. Thus, with respect to the example above, if the +1dB change in offset power is insufficient, then additional "above" error reports will result in further power increases until the error count is sufficiently low. Thereafter, the error report will tend to alternate between "above" and "not above," thereby keeping the chanslot error level virtually constant, at the preferred error threshold level.

The foregoing disclosure refers to transmitting and receiving data signals in general. In the preferred embodiment, these data signals are in the form of asynchronous transfer mode (ATM) cells. Thus, in the preferred embodiment, the error reports are in the form of error report cells. Figure 8 illustrates the structure of an error report cell 800 according to a preferred embodiment of the present invention. An ATM cell typically has 53 bytes wherein 5 bytes make up the header of the cell ("cell header") and 48 bytes make up the body of the cell ("cell body"). Like a typical ATM cell, an error report cell 800 generally includes a 5-byte cell header 801 and a 48-byte cell body 802. The cell body 802 generally further comprises a 4-byte subheader 803 and a 44-byte report field 803.

The primary function of the cell header 801 is to carry the address of the cell 800. The cell header 801 typically includes two individual fields known as the Virtual Path Indicator (VPI) and the Virtual Channel Indicator (VCI), which jointly serve as the "addressing field." The VPI and VCI are addressed to all UETs located within the beam. Each UET is required to monitor all cells that arrive in its downlink. When error report cells 800 are received by the UETs within the beam, the error report cells 800 are passed to each UET's error report processor (710 of Fig. 7) for parsing as explained above.

As briefly mentioned above, each error report cell corresponds to a particular set of uplink time slots in a particular uplink frame in which the related signal was transmitted. The subheader 803 of the report cell 800 contains fields to specify the uplink frame number and time slot number to which the report cell refers.

The 44-byte report field 804 for each error report cell 800 consists of a total of 176 dibits (2 bits per dibit, four dibits per byte) in the 44 byte report field 804. Generally, each dibit contains the error information (i.e., the 1-bit "above/not above" indicators) for two chanslots of the current frame. In the example case discussed above in which the uplink signal is divided into 175 channels and the frame is divided into 52 time slots, each dibit in the error report field 804 of an error report cell may correspond to one frequency channel, and each error report cell may contain the error indicators pertaining to two time slots of the current frame, over all 175 frequency channels. In this case the 176$^{th}$ dibit of the report field 804 may not be used. The first bit 808 of a dibit 805 may contain the error indicator pertaining to a first time slot S1 of the current frame, and the second bit 809 of a dibit 805 may contain the error indicator pertaining to a second time slot S2 of the current frame. For this example, 26 ATM error report cells would be required for transmission of the error indicators pertaining to all 9100 chanslots of the current frame.

Each UET knows the chanslots that it is allocated for transmission of data signals, as well as the frames in which it has transmitted data. Thus, the UET can easily identify the particular report cells 800 on any given downlink which contain relevant error information, and the UET may also readily locate the bit that is associated with a particular chanslot used by the UET.

Figure 9 is a flow chart illustrating the error-leveling method 900 of a preferred embodiment of the present invention. As explained above, the first step 901 is for the UET to transmit an uplink data signal using a particular chanslot from the UET to a satellite. As explained above, this is generally done by a conventional uplink transmitter and uplink transmit antenna. Furthermore, before any error-leveling adjustments have taken place, the uplink data signal is generally transmitted at a transmit power level equal to the reference power level. This reference power level is generally determined by the method and system described in the copending application entitled, "Method And System For Controlling Uplink Power In A Satellite Communication System Using Power Leveling," Serial No. _______________, filed on _______________. The next step 902 is for the satellite to receive the uplink data signal. This is generally accomplished by use of a standard uplink receiver and uplink receive antenna.

Next, the number of errors in the received data signal (generally referred to as the error count of the signal) is determined, and those errors are corrected (step 903). This is done by an error-correcting decoder such as, for example, a Reed-Solomon decoder. This error count is then compared to a predetermined threshold (step 904), and based on this comparison, an error indicator is generated (step 905) corresponding to the chanslot in which the received data signal was transmitted. As explained above, in one embodiment of the present invention, the error indicator is a one-bit indicator such that if, for example, the error count is greater than the error threshold ("above"), then the error indicator is equal to 1, and if the error count is less than or equal to the error threshold ("not above"), then the error indicator is equal to 0.

The error indicator for the present chanslot may then be combined with several other error indicators corresponding to other chanslots in the same frame, into an error report (step 906). This error report is then transmitted in a downlink to, and received by, all UETs in the cell coverage area to which the downlink is directed (steps 907 and 908). The error report is then processed (step 909) by the receiving UETs. As explained above, this processing step includes extracting the uplink frame number and time slot number to which the received error report pertains to determine if the UET transmitted a data signal in this frame/slot number. If the terminal did transmit in the subject frame/slot number indicated in the received error report, then the processing step further includes extracting the particular "above/not above" indicator bits from the received error report that are associated with the chanslot on which the particular UET transmitted an uplink data signal.

The next step 910 is adjusting the transmit power level of each chanslot on which the UET is authorized to transmit. As explained above, the transmit power level of a chanslot is adjusted based on an updated power offset corresponding to that chanslot, and a reference power level. The updated power offset is determined based on the error indicator for the chanslot and on the power offset for the previous data signal sent by the UET using this chanslot (generally this is zero if no prior uplink data signals have been sent on this chanslot during the current data transmission). Once the transmit power level is adjusted, the next data signal to be transmitted by the UET at the particular chanslot during the current data transmission is sent at this appropriate transmit power level, and the error loop described above with respect to Figure 9 is repeated.

Referring again to Figure 1, a preferred embodiment of the threshold leveling aspect of the present invention as applied to the exemplary satellite communication system 100 is now presented. As mentioned above, the satellite communication system includes a Network Control Center (NCC) 130 located in a NCC cell 132, a satellite 140, and a User Earth Terminal (UET) 110 located in a UET cell 112. The NCC 130 communicates with the satellite 140 via a NCC/Sat communication link 135. The NCC/Sat communication link 135 includes a NCC uplink 136 and a NCC downlink 137. The satellite 140 communicates with the UET 110 via a UET/Sat communication link 155. The UET/Sat communication link 155 includes a UET uplink 103 and a UET downlink 104.

In operation, signals may propagate from the NCC 130 to the satellite 140 via the NCC uplink 136 of the NCC/Sat communication link 135. Signals may also propagate from the satellite 140 to the NCC 130 via the NCC downlink 137 of the NCC/Sat communication link 135. Additionally, signals may propagate from the satellite 140 to the UET 110 via the UET downlink 104 of the UET/Sat communication link 155. Finally, signals may propagate from the UET 110 to the satellite 140 via the UET uplink 103 of the UET/Sat communication link 155.

Figure 10 illustrates a block diagram 1000 of the satellite communication system 100 of Figure 1, according to an embodiment of the present invention. The block diagram 1000 includes the NCC 130, satellite 140, UET 110, NCC/Sat communication link 135, and UET/Sat communication link 155 of Figure 1. The NCC 130 includes a NCC uplink transmitter 1012, a NCC downlink receiver 1014, a NCC memory 1016, and a NCC processor 1018. The satellite 140 includes a satellite downlink transmitter 1022, a satellite uplink receiver 1024, a satellite memory 1026, and a satellite processor 1028. The UET 110 includes a UET uplink transmitter 1042, a UET downlink receiver 1044, a UET memory 1046, and a UET processor 1048.

The term "channel" is a general term that refers to a communication resource assigned to an individual UET for communicating in a satellite communication system. In a preferred embodiment of the present invention, the satellite communication system may use frequency division multiple access (FDMA) in combination with time division multiple access (TDMA) to formulate available communication resources. In such an FDMA/TDMA system, a channel is typically referred to as a "chanslot." A chanslot may be defined as a time slot in a frequency channel. Alternatively, the present invention may be implemented in many other types of satellite communication systems, including systems using code division multiple access (CDMA), only FDMA, only TDMA or any other combination of CDMA, FDMA and TDMA. A preferred embodiment of the present invention is described in detail below in the context of an FDMA/TDMA system.

In operation, the UET uplink transmitter 1042 of the UET 110 transmits a synchronization signal (or "synch burst") over a selected chanslot in the UET uplink 103 to the satellite 140. During the transmission, the UET uplink transmitter 1042 transmits at a predetermined uplink power level. The transmitted synch burst is received at the satellite uplink receiver 1024 of the satellite 140. The satellite uplink receiver 1024 then measures the energy level of the received synch burst to determine a received energy level measurement.

A predetermined uplink energy level threshold is stored in the satellite memory 1026. Once the received energy level measurement has been determined at the satellite receiver 1024, the received energy level measurement is passed to the satellite processor 1028. The satellite processor 1028 compares the energy level of the received signal to the uplink energy level threshold. The "uplink energy level threshold" will also be referred to herein as the "uplink power level threshold." Conversion between energy level and power level may be necessary depending upon the particular embodiment of the invention. The satellite processor 1028 then determines a power adjustment signal for the UET uplink transmitter 1022 based on the received energy level measurement relative to the energy level threshold. The satellite processor 1028 then sends the power adjustment signal to the UET 110 using the satellite downlink transmitter 1022. The power adjustment signal propagates to the UET 110 over the UET downlink 104.

The UET downlink receiver 1044 receives the power adjustment signal and forwards the power adjustment signal to the UET processor 1048. The UET processor 1048 processes the power adjustment signal and commands the UET uplink transmitter 1042 to adjust its uplink synch burst transmit power. A system and method for adjusting the uplink transmit power of a UET is further described in U.S. Patent application Ser. No. _______________TRW 22-0108_______________, filed _______________, entitled "Method and System for Controlling Uplink Power In a Satellite Communication System Using Power Leveling", the subject matter of which is incorporated in its entirety herein by reference. The preferred embodiment of this application illustrates an exemplary process of adjusting the uplink transmit power used by a UET for transmitting a synch burst based on energy level measurement by the satellite of a prior received synch burst is referred to herein as power leveling.

The uplink power leveling process operates to maintain the uplink power level of the UET uplink transmitter 1042 at a level at which an associated received synch burst energy level at the satellite 140 is within a predetermined range of the uplink energy level threshold. As the power leveling process continues, the UET 110 stores its current uplink synch burst power level as its "UET uplink reference power level" in the UET memory 1046.

In an additional embodiment of the invention, the uplink power adjustment cycle may include multiple iterative steps in which the satellite 140 directs the UET 110 to incrementally change the transmit power until the associated received signal achieves a power level within an accepted power range near the predetermined uplink power level threshold. The incremental changes in power may vary from large initial changes to small final changes.

As the UET 110 prepares to initiate a data transmission to the satellite 140, the UET is assigned one or more chanslots for the transmission of data signals (or "traffic bursts") over the uplink 103. The NCC 130 preferably performs the chanslot assignment. At the initiation of a data transmission, the uplink power level used by the UET 110 for transmitting traffic bursts in each assigned chanslot may be determined by adding a fixed offset value to the UET uplink reference power level. The fixed offset value is stored in the UET memory 1046 and typically depends on the type of coding employed for the transmission of data in a given chanslot. A satellite communication system which employs more than one type of digital coding for the transmission of traffic bursts may require that the UET 110 stores in its memory 1046 a separate fixed offset value corresponding to each type of digital coding that differs from type of coding used for the transmission of synch bursts. If traffic bursts are transmitted using the same type of coding which is used for the transmission of synch bursts (from which the UET uplink reference power level is derived), the offset value is typically zero. A satellite communication system which employs more than one type of coding for the transmission of traffic bursts is further described in U.S. Patent application Ser. No. _______________ TRW 22-0011_______________ files _______________, titled "Adaptive Coding Scheme for a Processing Communication Satellite," the contents of which are incorporated herein by reference.

As the data transmission continues between the UET 110 and the satellite 140, the satellite 140 may command the UET 110 to adjust its uplink traffic burst power level, for example, in response to a data error rate measured at the satellite 140. Since the amount of interference, and therefore the data error rate experienced by the satellite 140, may be different for each chanslot in which traffic bursts are transmitted, the satellite 140 may command the UET 110 to adjust its uplink traffic burst power level independently for each chanslot which is assigned to the UET 110 for the transmission of traffic bursts. Thus, at any point in time after a data transmission is initiated, the UET 110 will have a current UET uplink traffic burst power level for each assigned chanslot that may differ substantially from the UET uplink reference power level as well as from the current UET uplink traffic burst power level for any other assigned chanslot. The UET 110 stores its current uplink traffic burst power level for each assigned chanslot in its UET memory 1046 as part of its power profile data.

A system and method for adjusting the uplink power level of a UET in response to a data error rate is further described in U.S. Patent application Ser. No. _______________TRW 22-0106 _______________, filed _______________, entitled "Method and System for Controlling Uplink Power In a Satellite Communication System Using Error Leveling", the subject matter of which is incorporated in its entirety herein by reference.

To adapt the uplink power level threshold to changing communication conditions, such as a dynamic interference environment, the NCC 130 polls the UETs 110 for uplink power level information (also referred to herein as UET power profile information). The NCC 130 may perform this adaptive function on a regular time schedule or it may be triggered by some condition, such as a detected shift in antenna beam pointing, a substantial shift in atmospheric conditions, or a degradation in overall system performance.

To poll the UETs 110, the NCC 130 initiates power profile requests to the UETs 110 in the system. The NCC 130 preferably determines the UETs 110 to poll from a database of UETs 110 known to be currently operating, but may alternatively poll all UETs 110 known to be located in a particular cell.

To poll a UET 110 for uplink power level information, the NCC processor 1018 forms an uplink power profile request for the UET 110 and transmits it through the NCC uplink transmitter 1012. The UET power profile requestpropagates to the satellite uplink receiver 1024 over the NCC uplink 136. The satellite 140 relays the request through the satellite downlink transmitter 1022. The request then propagates to the UET downlink receiver 1044 over the UET downlink 104. The UET downlink receiver 1044 receives the request and forwards the request to the UET processor 1048.

When the UET processor 1048 receives the UET uplink power profile request, it commands the UET uplink transmitter 1042 to retrieve the current UET uplink traffic burst power levels for each chanslot from the UET power profile data, which are stored in the UET memory 1046. The UET processor 1048 also retrieves the UET uplink reference power level from the UET power profile stored in the UET memory 1046. The UET processor 1048 then forms a UET power profile response, which includes UET uplink power level information.

The uplink power level information preferably comprises the difference between the uplink traffic burst power levels and the uplink reference power level. However, the uplink power level information may alternatively comprise the uplink traffic burst and reference power level values. The difference between the uplink power levels may, for example, be indicated by a standard measure of power, such as Watts (W) or decibels (dB). Alternatively, the difference may be expressed in terms of a number of discrete power steps, such as N steps, where each step represents a predetermined power increment, such as 0.125 dB. Alternatively, the uplink power level information may include a series of power levels at discrete points in time,

Once the UET processor 1048 forms the uplink power profile response, it transmits the response via the UET uplink transmitter 1042. The response propagates to the satellite uplink receiver 1024 over the UET uplink 103. The satellite 140 forwards the response through the satellite downlink transmitter 1022 to the NCC downlink receiver 1014 over the NCC downlink 137. The NCC downlink receiver 1014 forwards the uplink power profile response to the NCC processor 1018 for processing. Although the request/response communication path preferably passes through the satellite 140, alternative communication paths, such as land lines, may be used.

The NCC processor 1018 extracts the power level information from the response and adds the power level information to a database that the NCC processor 1018 builds in the NCC memory 1016. The database, when complete, will preferably contain uplink power level information for all of the UETs 110 polled by the NCC 130. The uplink power level information may, for example, be stored in a histogram format for storage and analysis efficiency.

When the NCC processor 1018 completes building the database, the NCC processor 1018 statistically analyzes the UET uplink power level information. The NCC processor 1018 preferably calculates the mean of the uplink power level information. For example, the NCC processor 1018 may determine that for all UETs polled, the uplink traffic burst power level for the average UET is 2 dB higher than the uplink reference power level. In addition, the NCC processor 1018 may analyze the database of UET power level information to arrive at an indication of the spread of the distribution. Such indication may, for example, comprise statistical variance or standard deviation. For example, the NCC processor 1018 may determine that 90% of the UETs have an uplink traffic burst power level that is at least 2dB higher than the uplink reference power level.

After the NCC 130 statistically analyzes the uplink power level information, the NCC 130 determines an uplink power threshold adjustment based on the statistical analysis. Assuming, for example, that similar coding schemes are employed for transmission of synch bursts and traffic bursts, if the NCC 130 determines in the statistical analysis that the average UET uplink traffic burst power level is 2 dB higher than the average UET uplink reference power level, the NCC 130 may arrive at an uplink power threshold adjustment of 2 dB (or alternatively N=16, where the step size is 0.125 dB).

Alternatively, if the NCC 130 also considered a spread, such as standard deviation, the NCC 130 may decide to command the threshold to be increased by the mean difference, as above, plus or minus n according to the proportion of UETs desired to begin data communication at an uplink power level above the estimated necessary uplink power level. As mentioned previously, there is a tradeoff between starting data communication with too little uplink power and too much uplink power. Thus, finding the optimal adaptive rule for a particular communication situation may require simulation or experience with the functioning system.

Once the NCC processor 1018 arrives at an uplink power threshold adjustment, the NCC processor 1018 sends it out via the NCC uplink transmitter 1012. The uplink power threshold adjustment travels over the NCC uplink 136 to the satellite uplink receiver 1024, which in turn forwards the adjustment to the satellite processor 1028. The satellite processor 1028 then retrieves the uplink power (or energy) level threshold from satellite memory 1026, modifies the threshold according to the uplink power threshold adjustment, and restores the threshold in satellite memory 1026. Thus, the system adapts the uplink power level threshold to changing communication conditions.

In a typical cellular satellite communication system, there may be many UETs communicating simultaneously. The UETs may each communicate using one or more chanslots. Preferably, a UET will transmit traffic bursts over all of its chanslots at a respective UET coding level and UET power level. However, in an alternate embodiment, a UET may communicate information over multiple chanslots, where each chanslot has a respective and independent power level and coding level.

Figure 11 illustrates an exemplary satellite communication system 1100 implementing power threshold leveling. The exemplary satellite communication system 1100 includes five UETs 1101-1105, a NCC 1160, and a satellite 1170. The five UETs 1101 - 1105 are communicating in a single cell according to an embodiment of the present invention. In this example, UET1 1101 communicates over communication linkl 1110 with power P1 and coding level C1 on chanslot 1. UET2 1102 communicates over communication link2 1120 with power P2 and coding level C1 on chanslot2. UET3 1103 communicates over communication link3 1130 with power P3 and coding level C1 on chanslot3 and with power P4 and coding level C2 on chanslot4. UET4 1104 communicates over communication link4 1140 with power P5 and coding level C2 on chanslot 5, with power P6 and coding level C2 on chanslot6, and with power P7 and coding level C2 on chanslot7. UET5 1105 communicates over communication link5 1150 with power P8 and coding level C1 on chanslot8.

Since the satellite communication system 1100 employs more than one type of digital coding C1, C2 for the transmission of traffic bursts, the NCC 1160 preferably maintains separate databases in its memory for each type of digital coding employed. As power profile data is received by the NCC 1160, it is compiled into the appropriate database according to the type of coding C1, C2. Since the NCC 1160 preferably assigns chanslots and type of coding to the UETs 1101-1105, the NCC 1160 has all of the information necessary to separate the data.

Uplink power threshold adjustments are preferably determined using the same type of coding (for example, C1) as employed in the transmission of synch bursts. Power profile data which corresponds to traffic bursts transmitted using types of coding (for example, C2) different from the type of coding employed for the transmission of synch bursts is then used to determined the values of a set of uplink power offsets. The uplink power offsets are used by the UETs 1101-1105 to determine the uplink power level for transmission of traffic bursts at the initiation of a data transmission. One uplink power offset value may be determined for each type of coding that differs from the type of coding employed for the transmission of synch bursts. Each uplink power offset value represents the difference between the uplink power level which would be required to achieve a desired error rate for traffic bursts transmitted using a given type of coding, and the uplink power level which would be required to achieve the same desired error rate for traffic bursts transmitted using the type of coding employed for transmission of synch bursts.

As an example, a digital coding scheme C1 employed for the transmission of synch bursts (and also traffic bursts) may require an SBR of 5 dB to achieve a desired error rate in the decoding of received data at the satellite 1170. A second coding scheme C2 employed for the transmission of traffic bursts may require an SBR of 10 dB to achieve the same desired error rate in the decoding of received data at the satellite 1170. The difference in required SBRs to achieve the same error rate for the two types of coding is then 5 dB. If the background level is constant, the uplink traffic burst power level used when coding scheme C2 is employed must be 5 dB higher than the uplink synch burst power level used when coding scheme C1 is employed. For this example, the uplink power level to be used by a UET when initiating a data transmission using coding scheme C2 is determined by adding an uplink power offset value of 5 dB to the uplink reference power level.

When a UET is first commissioned, the uplink power offset values stored in the UET memory may, as part of the power profile data, be based on theoretical performance of digital codes. In practice, the uplink power offset values required to maintain a desired error rate may vary due to specific characteristics of interference and satellite receiver electronics. Once a terminal is operational, updates to the uplink power offset values are determined in a manner similar to the uplink power level threshold adjustments.

When the NCC 1160 completes building the database corresponding to a given type of coding, the NCC 1160 statistically analyzes the UET uplink power level information contained in that database. The NCC 1160 preferably calculates the mean of the uplink power level information, and may also calculate additional parameters such as statistical variance or standard deviation. The NCC 1160 then determines an uplink power offset value based on the statistical analysis. For example, if the NCC 1160 determines in the statistical analysis that the average UET uplink traffic burst power level is 5 dB higher than the average UET uplink reference power level, the NCC 1160 may determine an uplink power offset value of 5 dB (or alternatively N=40, where the step size is 0.125 dB).

When the NCC 1160 arrives at an uplink power offset value, the NCC 1160 sends a traffic burst containing the uplink power offset value to the UETs 1101-1105. The traffic burst travels over the NCC uplink 1161 and communication links 1110, 1120, 1130, 1140, 1150 from the satellite 1170 to the UETs 1101-1105. The UETs 1101-1105 receive the uplink power offset value from the satellite 1170 and adjust their respective local uplink power offset values. Thus, the system adapts the uplink power offset values to changing communication conditions.

Uplink power level thresholds and uplink power offset values may be controlled for an entire multicell coverage area for a satellite communication network. Alternatively, uplink power level thresholds and uplink power offset values may be controlled for each cell individually or for regions within individual cells. The degree of individuality for regions or cells depends on the needs of the particular satellite communication system application.

Unbalanced UET weighting in a cell is a potential issue that may adversely affect the statistical calculations. For example, UET3 1103 is communicating over one chanslot at coding level C2, while UET5 1105 is communicating over three chanslots at coding level C2. Thus the power level information from UET5 1105 could dominate the statistical calculations even though it represents a relatively small cross-section of the cell 1180. One solution to this is to have UETs reply with one average power level indication for each coding level rather than a power level indication for each chanslot. However, since the high traffic UETs are likely carrying the majority of the traffic, it is possible that unbalanced weighting is appropriate. Until more information becomes available, the preferable way to report uplink power level information is by a one-to-one chanslot-to-uplink power level correspondence.

The satellite communication systems illustrated thus far show all of the UETs in one cell. In an alternative embodiment of the present invention, the system is readily extended to multi-cell systems. In these embodiments, the NCC builds and analyzes separate databases for each cell in the system. This embodiment provides separate uplink power level thresholds and uplink power offset values to be determined for each cell, so that the communication system may be optimized, for example, for differences in satellite receiver electronics corresponding to different cells, as well as for differences in the interference characteristics of the particular geographic areas covered by each cell.

Figure 12 illustrates a method for power threshold leveling 1200 for use in a satellite communication system according to an embodiment of the present invention. In the database building loop 1210, the system forms a power profile request (UET uplink power information request) 1212. The system then sends the power profile request to one or more UETs 1214. One objective here is to obtain the necessary power profile information from each UET without overburdening the system with non-traffic data. Accordingly, the system may spread the power profile requests to the UETs over a relatively large time period.

When a UET receives a power profile request, the UET analyzes the request and initiates a UET power profile response 1216. The UET then consults its power profile (containing uplink power level information) stored in memory, performs necessary measurements or calculations, and prepares the power profile response for sending 1218. The UET then sends the completed response back to the power profile requestor 1220, preferably via satellite.

When the requestor (preferably the NCC) receives the power profile response, the requester extracts the power profile information and updates a power profile database. The database may, for example, include power profile histograms. The database building loop 1210 continues indefinitely.

At the beginning of the threshold offset updating loop 1250, the requestor clears the power profile database and waits to start the UET uplink power profile collection process 1252. The requestor may wait for either a time event or some other type of event, like a performance degradation warning from the system. When the requestor completes repopulating the power level database(s) with new UET uplink power profile information, the requestor statistically analyzes the information. The requestor preferably determines the arithmetic mean, and optionally determines other statistical measures, such as variance or standard deviation 1254.

In a system utilizing multiple coding levels, the requestor determines an uplink power level threshold adjustment indication by analyzing the uplink power profile statistics for a chosen (or base) coding level in light of the current uplink power level threshold 1256. The requestor communicates the new uplink power threshold adjustment to the satellite 1258, which then processes the threshold adjustment to arrive at a new threshold 1260.

The requestor also analyzes the database(s) of UET uplink power profile information for the non-base coding levels to arrive at uplink power offset values for the non-base coding levels 1262. The requestor communicates the new uplink power offset values to the UETs 1264, which then update the power offset values stored in memory. The power offset values are then used by the UETs when establishing communication using non-base coding levels.

The preferred embodiments of the present invention provide a method and apparatus for adaptive power threshold leveling for a satellite communication system. In a communication environment with a dynamic interference component, closed-loop power threshold leveling enables earth terminals to more quickly converge to the appropriate uplink power level. Closed-loop power threshold leveling minimizes data loss by reducing co-channel interference caused by unnecessarily powerful transmissions and by reducing data error loss caused by unnecessarily weak transmissions.

The power leveling, error leveling, and threshold leveling aspects of the preferred embodiment of the present invention may be combined to form a comprehensive, self-adjusting and self-calibrating uplink power control system and method. That is, first, the power leveling aspect may adjust the uplink transmission power for the UETs in a communication cell. The uplink power is adjusted in accordance with a threshold determined by the threshold leveling aspect. The power leveling aspect uses the synch bursts, which are sent continuously, even in stand-by mode, so an accurate reference power level for the UET is continuously available. When a UET begins transmitting data, the data transmission takes place at the reference power level determined by the power leveling aspect, although the UET may add an additional power offset to an initial data transmission to ensure receipt by the satellite. Once the satellite is receiving data, the satellite performs according to the error leveling aspect and adjusts the transmission power of the UET up or down accordingly. The adjustments derived from the power and error leveling aspects do not conflict because, for any transmission channel, the uplink reference power determined by the power leveling aspect is accessed only at the initiation of transmission and thereafter error leveling provides the uplink power adjustment. The power leveling aspect still continues to operate after a UET begins transmitting data, but when determining an uplink transmission power level for traffic bursts, the UET does not access the reference power level determined by the power leveling aspect. However, at some later time, whenever the terminal begins a new data transmission, the updated reference power level of the power leveling aspect is used.

Because the power leveling aspect is based on an energy level measurement and the error leveling aspect is based on an error measurement, the two aspects may at times disagree as to the optimal uplink transmission power. However, the error rate is the more important index of overall system performance. Consequently, the energy level threshold for the power leveling aspect may be periodically adjusted, by using threshold leveling, to conform more to the desired error rate. For threshold leveling, the UETs in a cell are polled. For each assigned chanslot, the uplink reference power (determined by the power leveling aspect) and the uplink traffic burst power (determined by the error leveling aspect) are sent to the NCC for processing. The NCC compares the initial and present uplink powers of the channels to determine an adjustment for the power threshold for the power leveling aspect. For example, if the average present uplink power for the channels is less then the initial uplink power, the power threshold may be adjusted downward so that the initial uplink power for future channels will be closer to the present uplink power. Additionally, data may be transmitted using more than one coding level, for example light and heavy coding levels. Because different coding levels are associated with different uplink powers and different error rates, the a additional uplink power threshold and error rate may be established to facilitate multiple coding levels. The additional power threshold and error rate may function substantially as above, and may merely provide different offsets representative of the different power requirements of the additional coding technique.

Figure 13 illustrates a comprehensive system block diagram 1300 showing the inter-operation of the power leveling, error leveling, and threshold leveling aspects of a preferred embodiment of the present invention. The block diagram 1300 is separated vertically into a power leveling partition 1310, an error leveling partition 1320, a threshold leveling partition 1330, and is separated horizontally into a UET partition 1340, a satellite partition 1350, and a NCC partition 1360. The partitions 1310-1540 illustrates where, with regard to the UET, satellite, and NCC that the power, error, or threshold leveling is occurs.

First, at block 1, in standby or active state, the UET periodically sends synchronization bursts to the satellite. The power level at which these bursts are sent is in accordance with block 4, below. Next, at block 2 the satellite receives the synchronization bursts and forms a measure of the total (signal plus background) energy present in the burst. This measurement is compared to a threshold (supplied from the NCC, at block 5 below) to form a high/low indicator. Then, at block 3, the high/low indicators for all of the synch bursts in a given slot of a given frame are organized into power level report cells and sent to the UETs via the downlink. At block 4, the UET receives the power level report cell, locates the high/low indicator associated with itself, and adjusts its power by a small step. The reference power is made available to block 8 below. At block 5, beginning the active mode, the UET transmits traffic bursts on chanslots to which it has been assigned. The power level used for each burst is as determined at block 8, below. At block 6, the satellite receives traffic bursts uplinked by the UET. In the course of so doing, a count of errors present in the burst is formed. This error count is compared to a threshold to form an above/below indicator. At block 7, the above/below indicators for all of the traffic bursts in a given slot of a given frame are organized into error level report cells and sent to the UETs via the downlink. At block 8, the error level report cells are received by the UET, which locates the above/below indicators for each of the chanslots to which it is currently assigned. The power level for each such chanslot is adjusted by a small amount according to the above/below indicator, and retained in memory for use by the UET at the next use of the chanslot (at block 5). This power level profile may also be made available to block 11, below, to facilitate responding to power profile requests. The power profile is preferably maintained in terms of offset relative to the reference power level established at block 4 above and is expressed in units of the stepsize. The levels used when a terminal first accesses a chanslot are determined by the reference level (from block 4) and - if adaptive coding is used - by the standard differential for light code, supplied by the NCC from block 13 below. At block 9, the NCC periodically initiates power profile request messages which it relays to selected UETs using the normal uplink and downlink communication facilities of the processing satellite. At block 10, the UET receives a power profile request message from the NCC. At block 11, the UET forms a power profile response message, stating the power levels established at block 8, above, relative to the reference power level established at block 4 above. The UET relays the power level response back to the NCC through the satellite. At block 12, the NCC receives the power level report messages from the UETs. At block 13, the NCC forms a database from the power level reports and performs a statistical analysis of the power level data. For example, the mean value of the chanslot power levels may be calculated and used to determine any corrections needed to the thresholds for the various beams. New thresholds are transmitted to the satellite for subsequent use in block 2 above. If adaptive coding is in use, the NCC maintains multiple databases, one for each of the coding rates in use. When new thresholds are determined, the NCC also determines new standard offsets between the power levels for the different adaptive code rates. These offsets are transmitted to UETs (preferably via ATM messages) for use in determining the initial chanslot transmit power level, at block 8.

The synthesis of the power, error and threshold leveling aspects of the preferred embodiment of the present invention thus provides a comprehensive, self-adjusting and self-calibrating uplink power control system and method. The uplink transmit power is initially self-adjusted by using power leveling and then fine-tuned during data transmission by using error leveling. The system is then self-calibrated periodically by using threshold leveling and comparing the uplink traffic burst power determined by error leveling with the uplink reference power determined by power leveling. Thus, the system adapts to changing gain demands, such as from time-varying atmospheric attenuation or pointing errors.

While particular elements, embodiments and applications of the present invention have been shown and described, it is understood that the invention is not limited thereto since modifications may be made by those skilled in the art, particularly in light of the foregoing teaching. It is therefore contemplated by the appended claims to cover such modifications and incorporate those features which come within the spirit and scope of the invention.

## Claims

1. A satellite communication system including a User Earth Terminal (UET), a satellite, and a Network Control Center (NCC), an uplink power control system comprising:

a UET including an uplink transmitter controlling an initial uplink transmission power level for uplink signals based on the power of said uplink signals received at a satellite relative to a threshold and controlling a current uplink transmission power level based on the number of errors in said uplink signals received at said satellite;
a satellite including:

a power determination module determining the power of said uplink signals received at said satellite relative to a threshold; and
an error detector for determining the number of errors in said uplink signals received at said satellite;

a NCC including a processor comparing said initial uplink transmission power level with said current uplink transmission power level and controlling said threshold based said comparing.

**2.** The system of claim 1 wherein said initial uplink transmission power level is determined based on uplink synch bursts.

**3.** The system of claim 1 wherein said satellite further includes a report cell former for forming reports based on the power of said uplink signals received at said satellite relative to a threshold, and said UET further includes a report parser for parsing reports.

**4.** The system of claim 1 wherein said satellite further includes an error report circuit for forming reports based on the number of errors in said uplink signals received at said satellite, and said UET further includes a report processor for processing reports.

**5.** The system of claim 1 wherein said UET further includes a power profile processor generating a power profile for said UET.

**6.** The system of claim 1 wherein said NCC forms a database comprising initial uplink transmission power levels and current uplink transmission power levels for a plurality of UETs.

**7.** The system of claim 6 wherein said database is statistically analyzed and the result of the analysis is used to control said threshold.

**8.** The system of claim 1 wherein the statistical analysis includes determining the mean of the plurality of initial uplink transmission power levels and current uplink transmission power levels.

**9.** A User Earth Terminal (UET) in a satellite communication system comprising:

an uplink transmitter controlling an initial uplink transmission power level for uplink signals based on the power of said uplink signals received at a satellite relative to a threshold,
said uplink transmitter controlling a current uplink transmission power level based on the number of errors in said uplink signals received at said satellite,
said threshold adjusted periodically by comparing said initial uplink transmission power level to said current uplink transmission power level.

**10.** The UET of claim 9 further comprising a report cell parser for parsing reports based on the power of said uplink signals received at a satellite relative to a threshold.

**11.** The UET of claim 9 further comprising a report processor for processing reports based on the number of errors in said uplink signals received at said satellite.

**12.** The UET of claim 9 wherein said uplink signals are transmitted over a number of channels and the UET further includes a power profile processor determining the power of said uplink signals for each channel.

**13.** A method for controlling an uplink power control system for a satellite communication system comprising the steps of:

controlling an initial uplink transmission power level for uplink signals based on the power of said uplink signals received at a satellite;

controlling the current uplink transmission power level for said uplink signals based on the number of errors in said uplink signals received at said satellite; and
controlling said initial uplink transmission power level by comparing said initial uplink transmission power level with said current uplink transmission power.

**14.** The method of claim 13 wherein said step of controlling an initial uplink transmission power level comprises the step of controlling an initial uplink transmission power level for uplink synch burst signals based on the power of said uplink synch burst signals received at a satellite.

**15.** The method of claim 13 wherein said uplink signals originate from a UET.

**16.** The method of claim 15 further including the step of transmitting a power level report from the satellite to the UET based on the power of said uplink signals received at said satellite relative to a threshold.

**17.** The method of claim 15 further including the step of transmitting an error report from the satellite to the UET based on the number of errors in said uplink signals received at said satellite.

**18.** The method of claim 15 further including the step of generating a power profile for said UET.

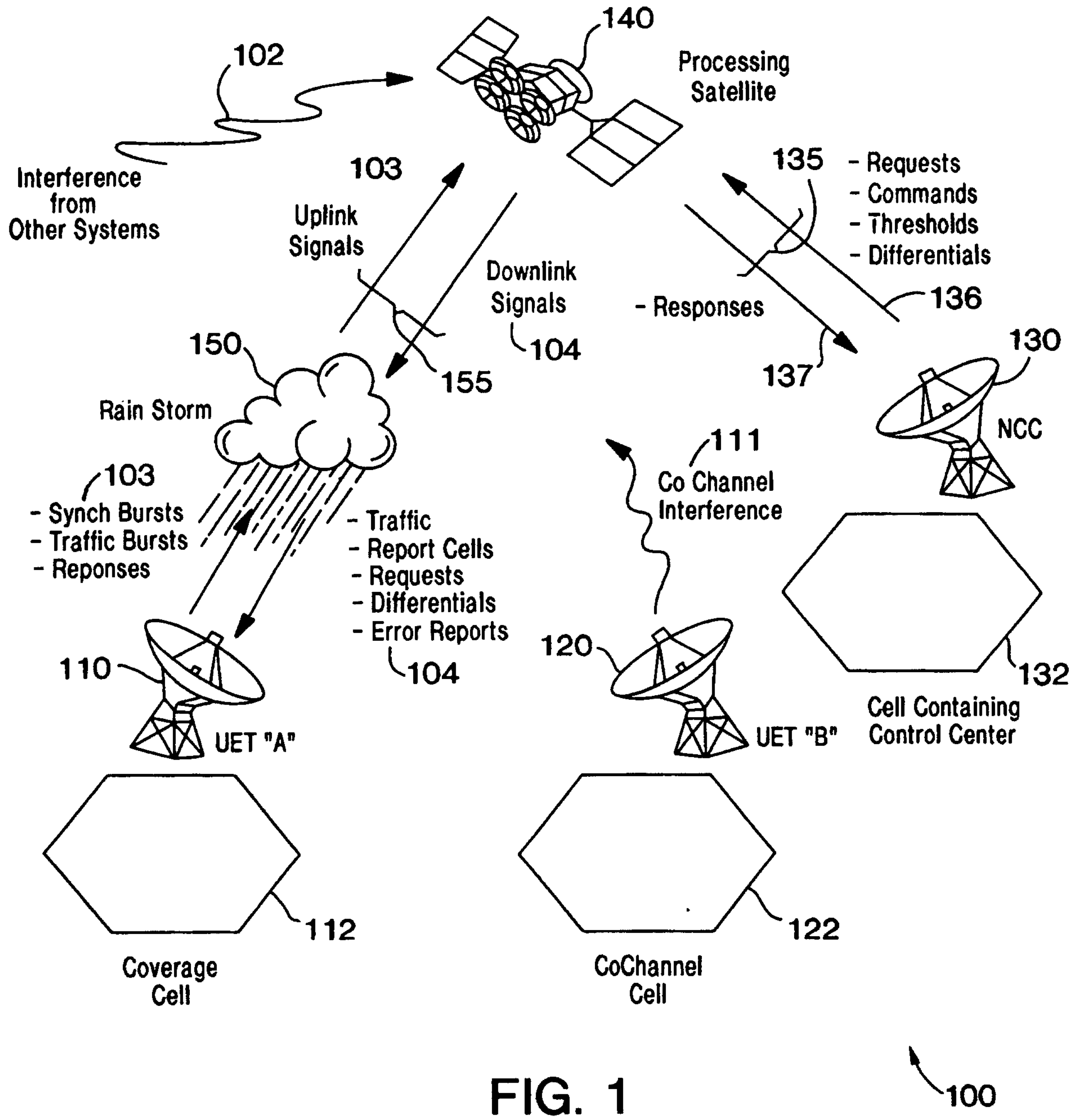
140
Processing Satellite
102
Interference from Other Systems
103
Uplink Signals
Downlink Signals
104
155
150
Rain Storm
135
- Requests
- Commands
- Thresholds
- Differentials
- Responses
136
137
130
NCC
111
Co Channel Interference
103
- Synch Bursts
- Traffic Bursts
- Reponses
- Traffic
- Report Cells
- Requests
- Differentials
- Error Reports
104
110
UET "A"
120
UET "B"
132
Cell Containing Control Center
112
Coverage Cell
122
CoChannel Cell
100

FIG. 1

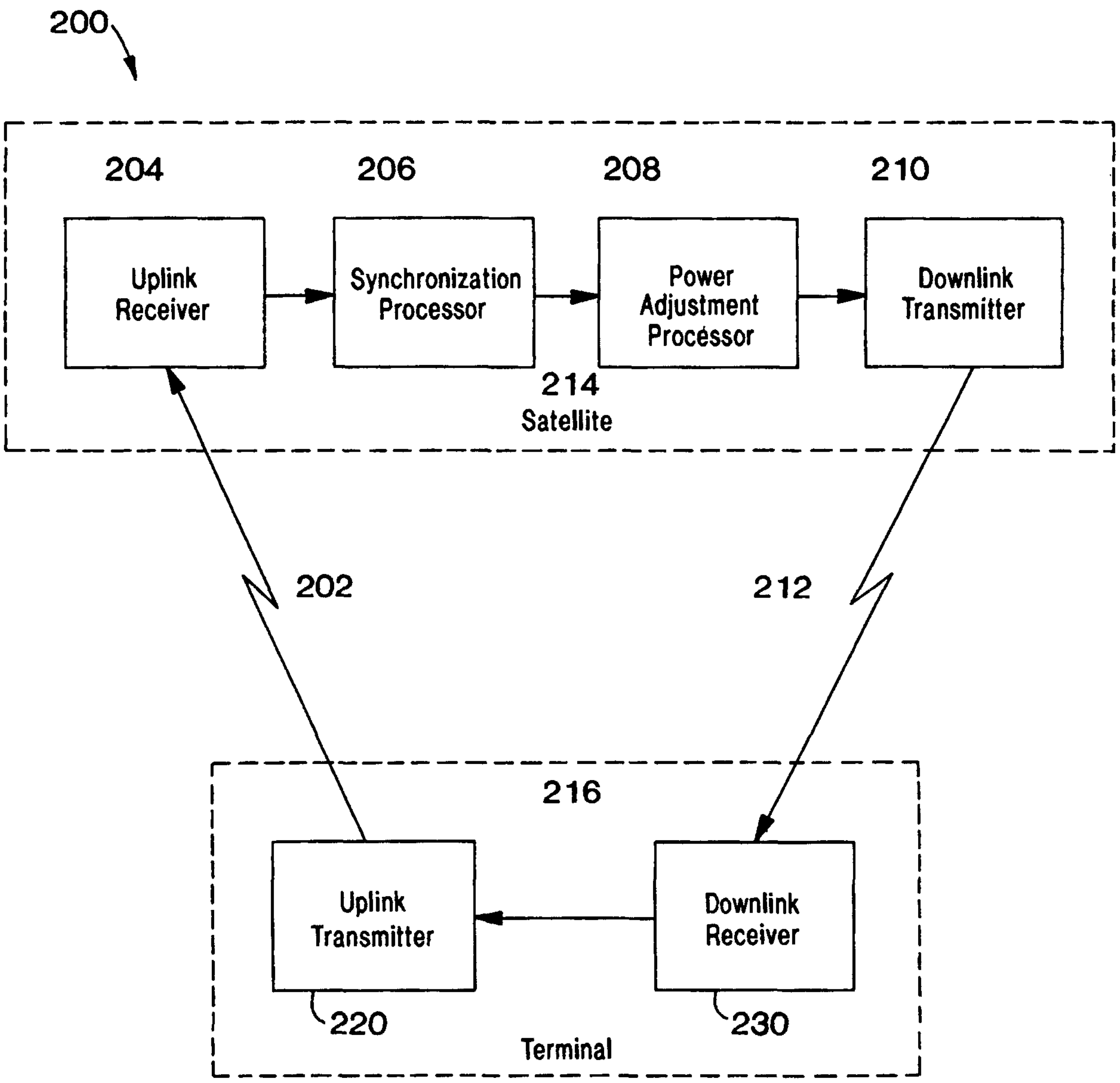
200
204
206
208
210
Uplink Receiver
Synchronization Processor
Power Adjustment Processor
Downlink Transmitter
214
Satellite
202
212
216
Uplink Transmitter
Downlink Receiver
220
230
Terminal

FIG. 2

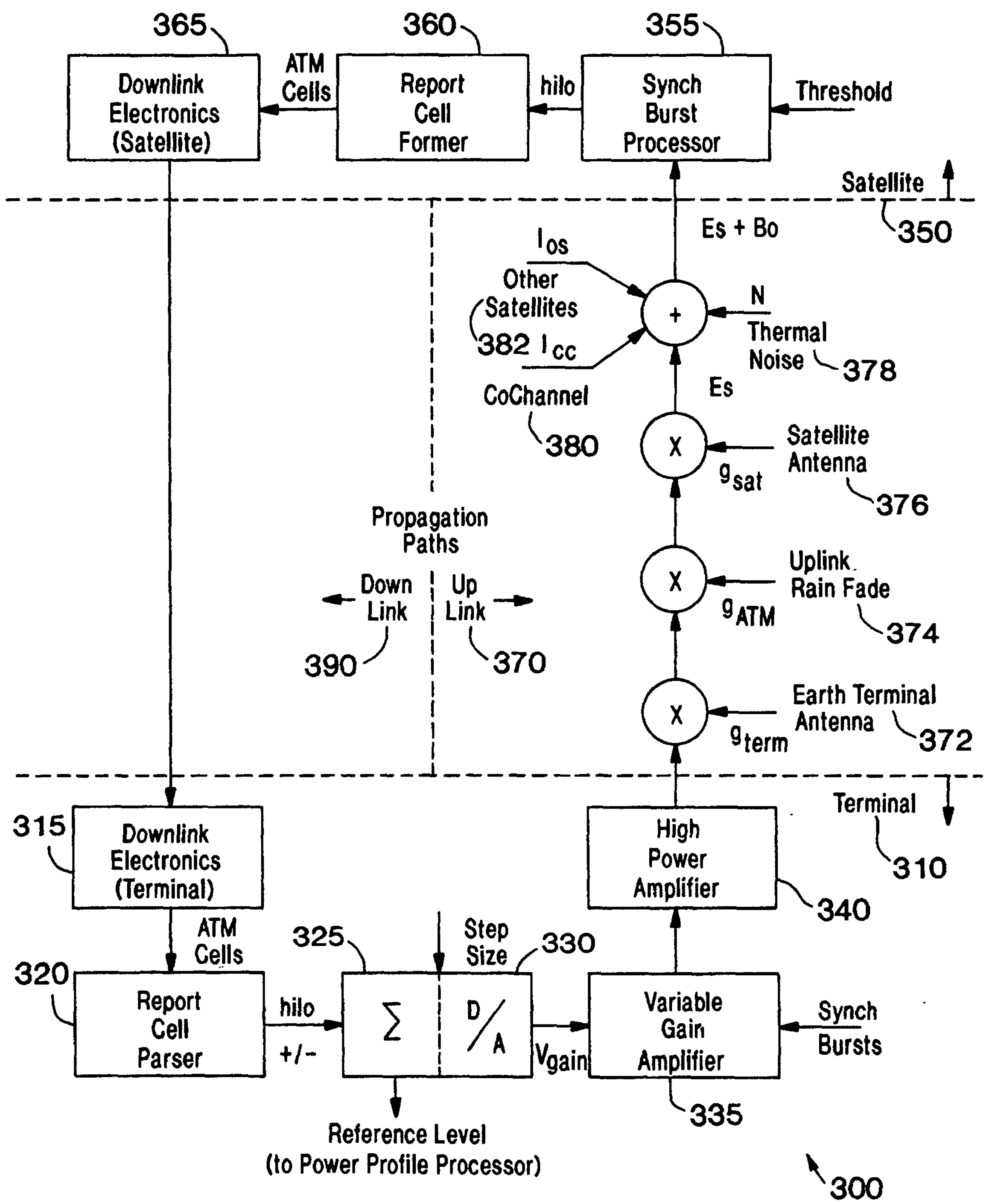
365
Downlink Electronics (Satellite)
ATM Cells
360
Report Cell Former
hilo
355
Synch Burst Processor
Threshold
Satellite
350
Es + Bo
$I_{os}$
Other Satellites
382 $I_{cc}$
CoChannel
380
+
N
Thermal Noise
378
Es
X
$g_{sat}$
Satellite Antenna
376
Propagation Paths
Down Link
Up Link
390
370
X
$g_{ATM}$
Uplink Rain Fade
374
X
$g_{term}$
Earth Terminal Antenna
372
Terminal
310
315
Downlink Electronics (Terminal)
High Power Amplifier
340
ATM Cells
325
Step Size
330
320
Report Cell Parser
hilo
+/-
∑
D/A
$V_{gain}$
Variable Gain Amplifier
Synch Bursts
335
Reference Level (to Power Profile Processor)
300

FIG. 3

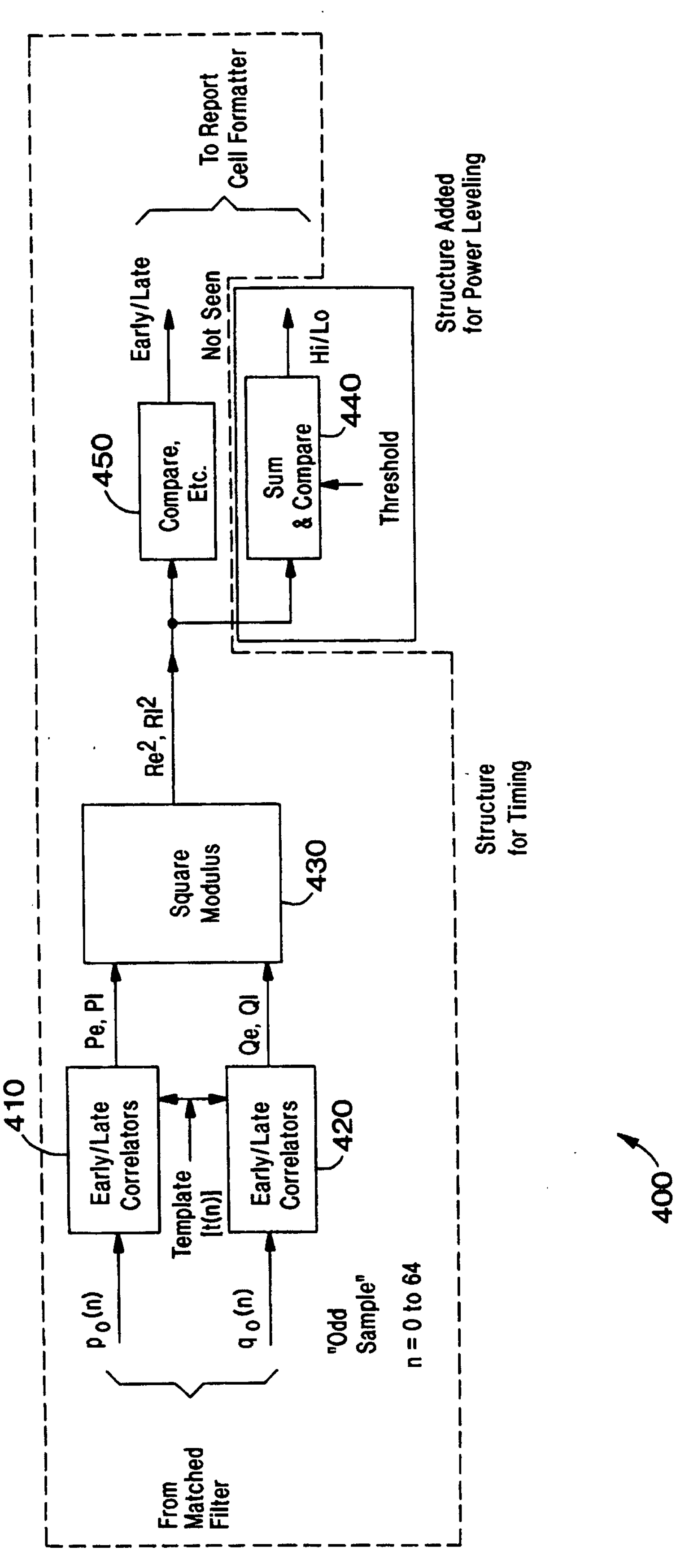
From Matched Filter
$p_0(n)$
$q_0(n)$
"Odd Sample"
n = 0 to 64
Early/Late Correlators
410
Template [t(n)]
Early/Late Correlators
420
Pe, Pl
Qe, Ql
Square Modulus
430
$Re^2$, $Rl^2$
Compare, Etc.
450
Early/Late
Not Seen
To Report Cell Formatter
Sum & Compare
440
Threshold
Hi/Lo
Structure Added for Power Leveling
Structure for Timing
400

FIG. 4

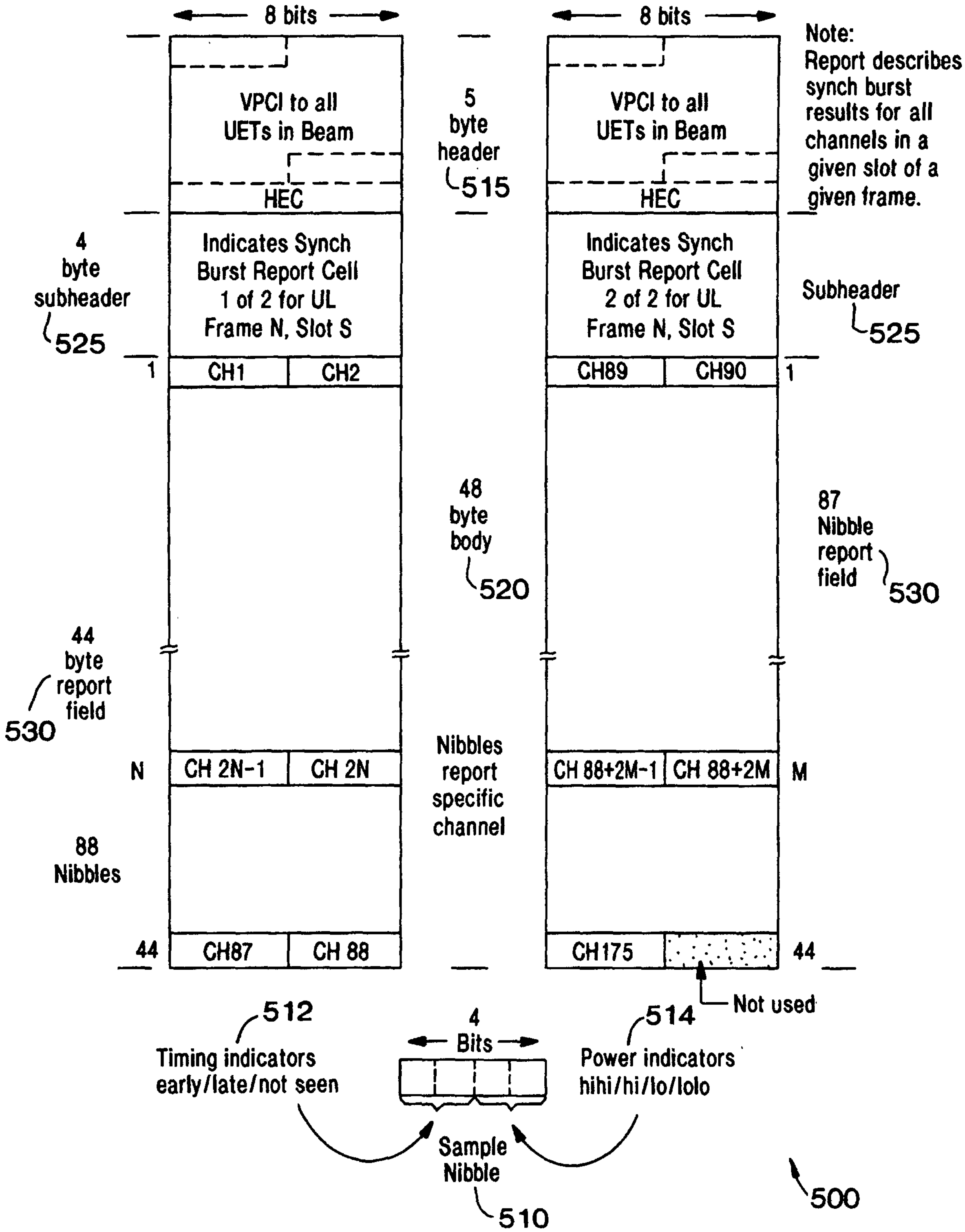
8 bits
8 bits
Note:
Report describes synch burst results for all channels in a given slot of a given frame.
VPCI to all UETs in Beam
HEC
VPCI to all UETs in Beam
HEC
5 byte header
515
4 byte subheader
525
Indicates Synch Burst Report Cell 1 of 2 for UL Frame N, Slot S
Indicates Synch Burst Report Cell 2 of 2 for UL Frame N, Slot S
Subheader
525
1
CH1
CH2
CH89
CH90
1
48 byte body
520
87 Nibble report field
530
44 byte report field
530
N
CH 2N-1
CH 2N
Nibbles report specific channel
CH 88+2M-1
CH 88+2M
M
88 Nibbles
44
CH87
CH 88
CH175
44
Not used
512
Timing indicators early/late/not seen
4 Bits
514
Power indicators hihi/hi/lo/lolo
Sample Nibble
510
500

FIG. 5

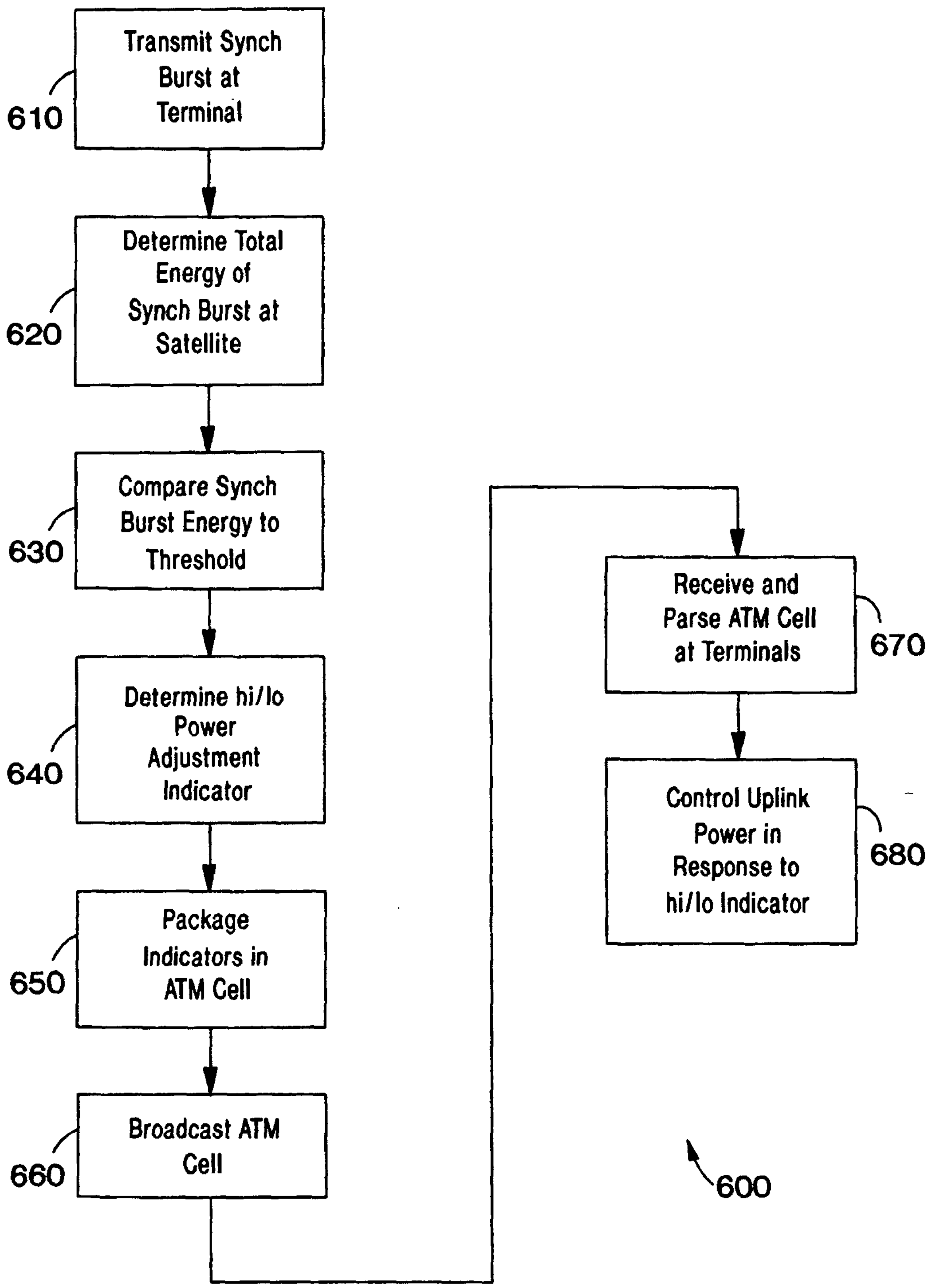
Transmit Synch Burst at Terminal
610
Determine Total Energy of Synch Burst at Satellite
620
Compare Synch Burst Energy to Threshold
630
Determine hi/lo Power Adjustment Indicator
640
Package Indicators in ATM Cell
650
Broadcast ATM Cell
660
Receive and Parse ATM Cell at Terminals
670
Control Uplink Power in Response to hi/lo Indicator
680
600

FIG. 6

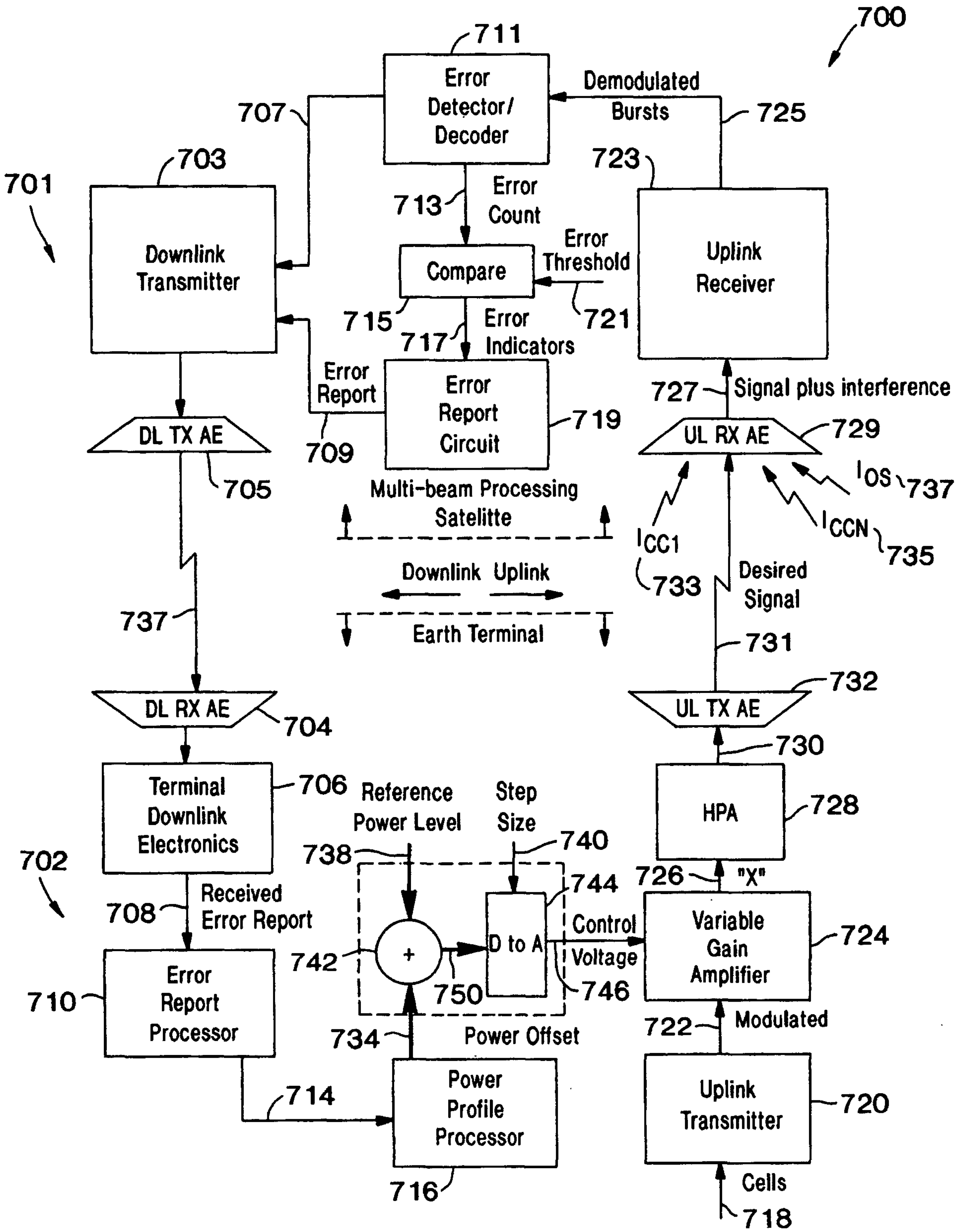
700
701
702
Error Detector/ Decoder
711
Demodulated Bursts
725
707
703
Downlink Transmitter
713
Error Count
723
Uplink Receiver
Compare
Error Threshold
715
721
717
Error Indicators
Error Report
709
Error Report Circuit
719
727
Signal plus interference
DL TX AE
705
UL RX AE
729
Multi-beam Processing Satelitte
$I_{OS}$
737
$I_{CCN}$
735
$I_{CC1}$
733
Desired Signal
Downlink
Uplink
Earth Terminal
737
731
DL RX AE
704
UL TX AE
732
730
Terminal Downlink Electronics
706
Reference Power Level
Step Size
HPA
728
738
740
744
726
"X"
708
Received Error Report
Variable Gain Amplifier
724
742
D to A
Control Voltage
750
746
Error Report Processor
710
734
Power Offset
722
Modulated
714
Power Profile Processor
716
Uplink Transmitter
720
Cells
718

FIG. 7

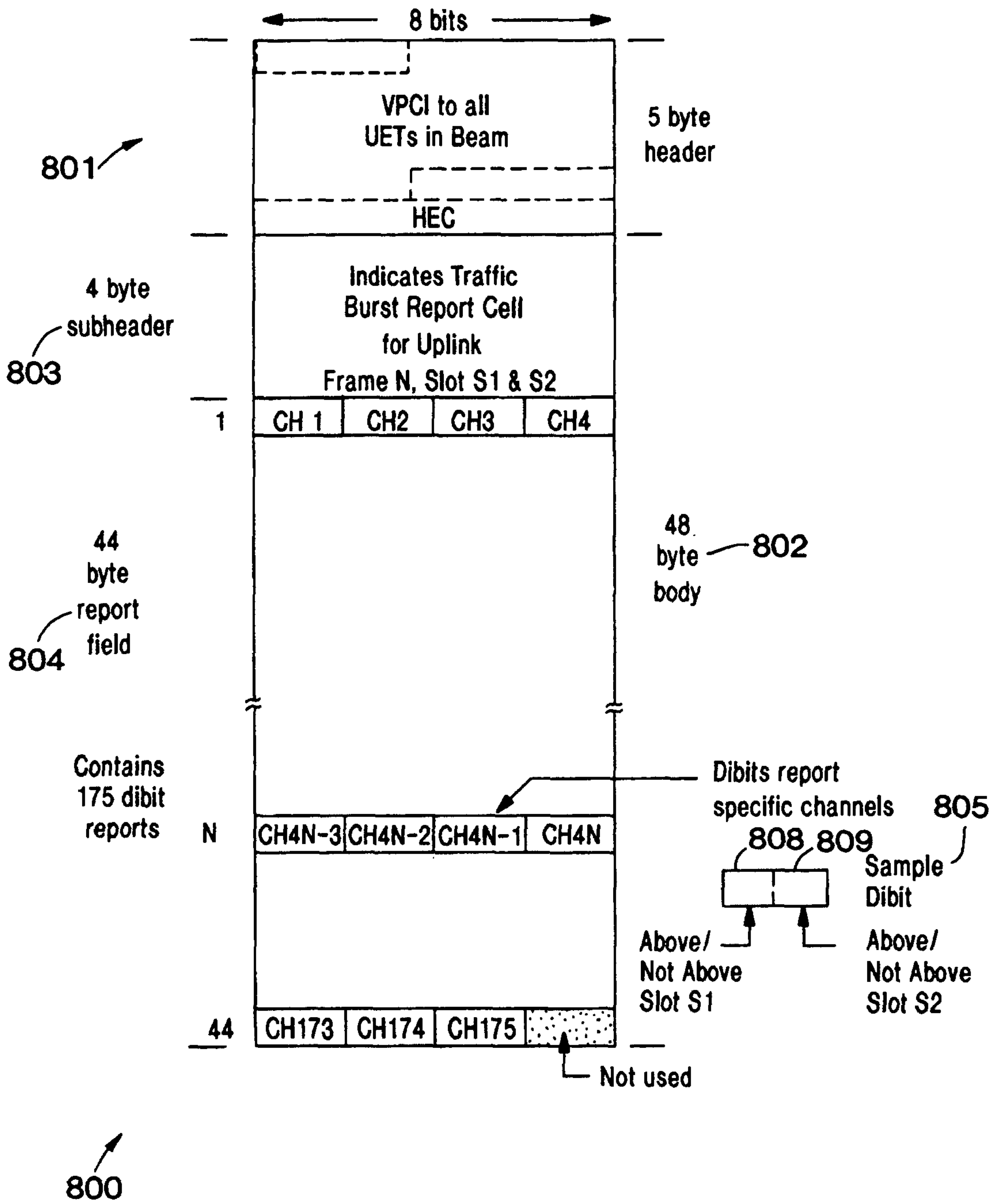
8 bits
VPCI to all
UETs in Beam
5 byte
header
801
HEC
4 byte
subheader
803
Indicates Traffic
Burst Report Cell
for Uplink
Frame N, Slot S1 & S2
1
CH 1
CH2
CH3
CH4
44
byte
report
field
804
48
byte
body
802
Contains
175 dibit
reports
N
CH4N-3
CH4N-2
CH4N-1
CH4N
Dibits report
specific channels
805
808
809
Sample
Dibit
Above/
Not Above
Slot S1
Above/
Not Above
Slot S2
44
CH173
CH174
CH175
Not used
800

FIG. 8

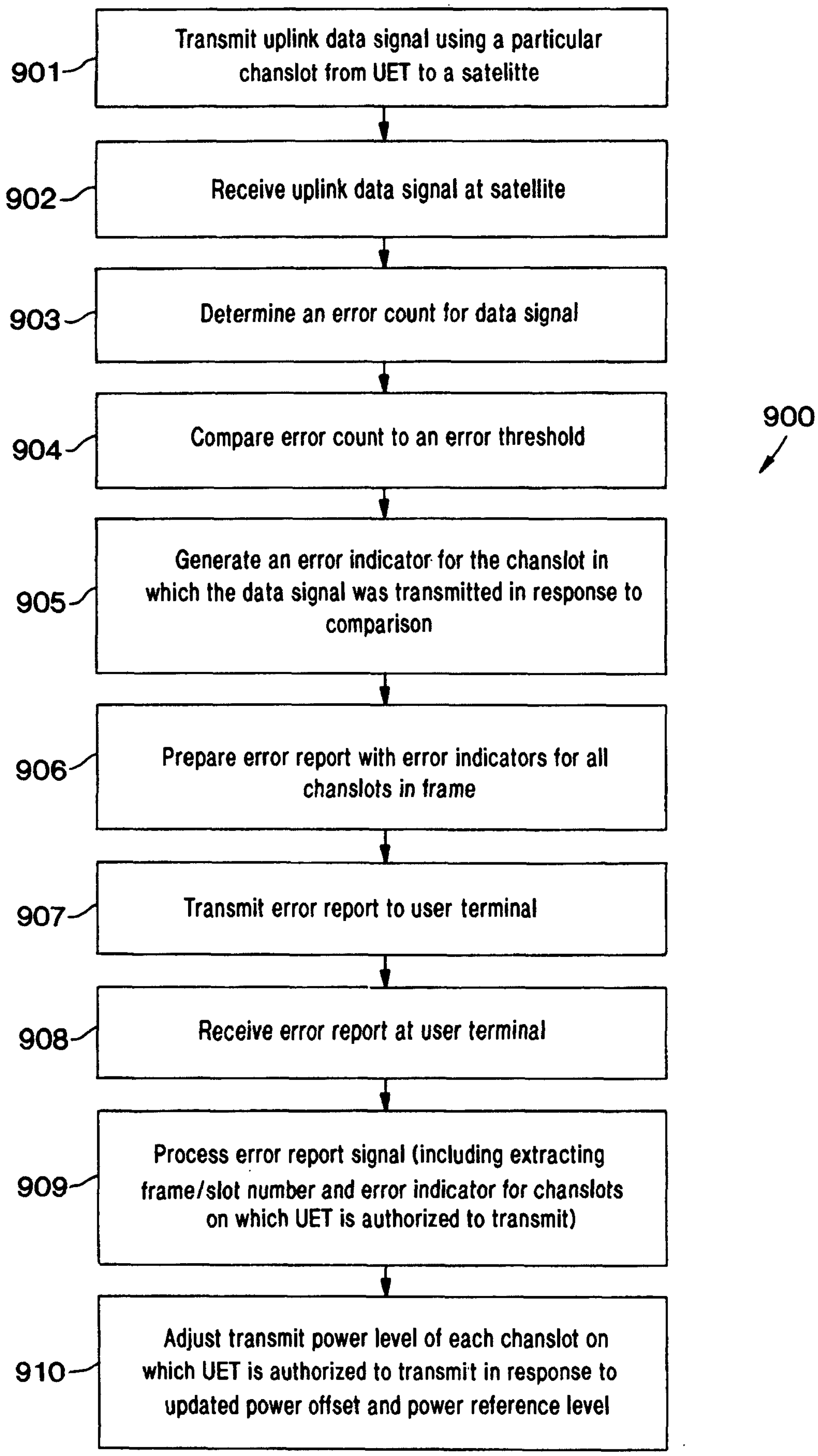
Transmit uplink data signal using a particular chanslot from UET to a satelitte
901
Receive uplink data signal at satellite
902
Determine an error count for data signal
903
Compare error count to an error threshold
904
900
Generate an error indicator for the chanslot in which the data signal was transmitted in response to comparison
905
Prepare error report with error indicators for all chanslots in frame
906
Transmit error report to user terminal
907
Receive error report at user terminal
908
Process error report signal (including extracting frame/slot number and error indicator for chanslots on which UET is authorized to transmit)
909
Adjust transmit power level of each chanslot on which UET is authorized to transmit in response to updated power offset and power reference level
910

FIG. 9

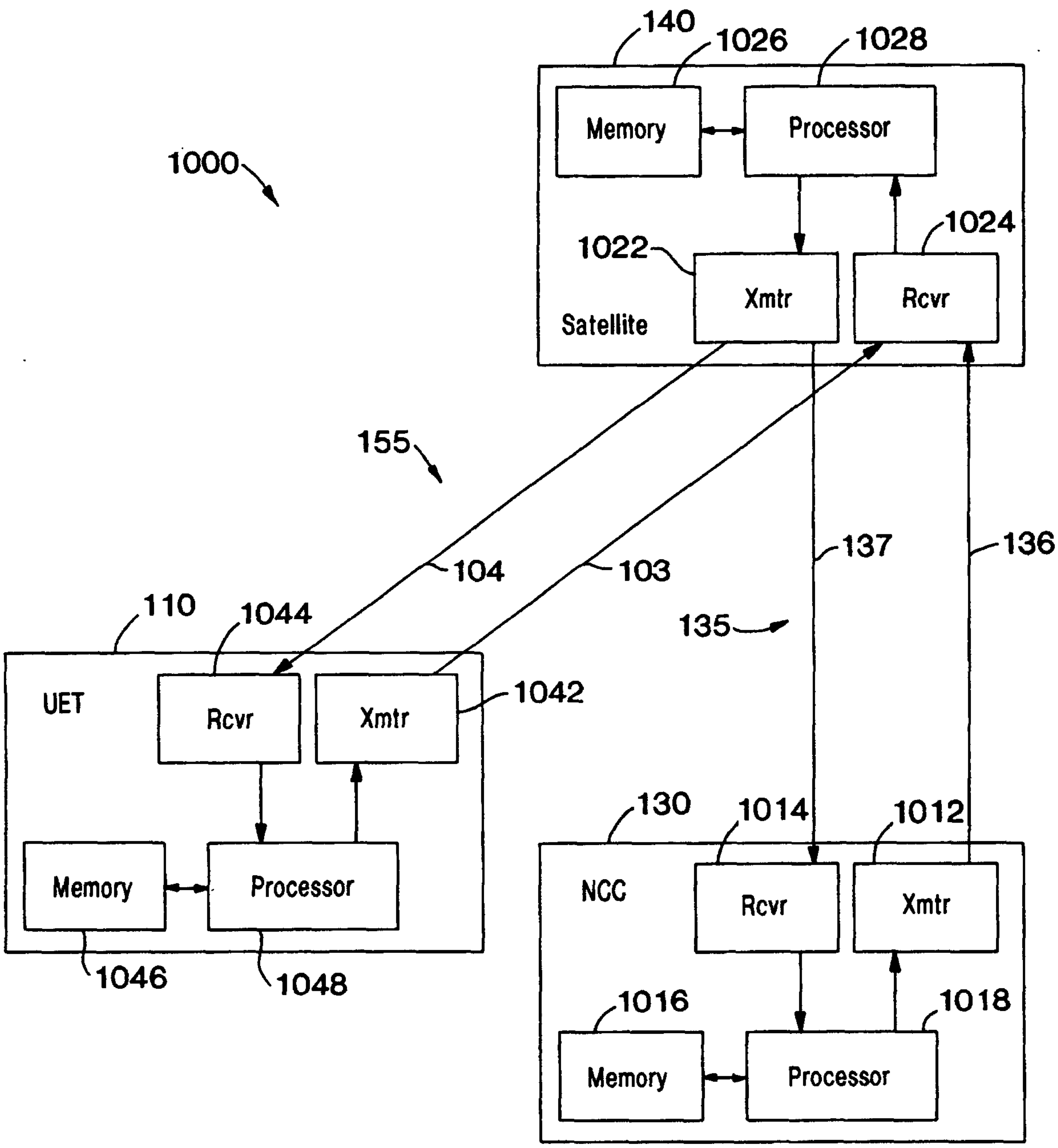
1000
140
1026
1028
Memory
Processor
1022
Xmtr
Rcvr
1024
Satellite
155
104
103
137
136
135
110
1044
UET
Rcvr
Xmtr
1042
Memory
Processor
1046
1048
130
1014
1012
NCC
Rcvr
Xmtr
1016
1018
Memory
Processor

FIG. 10

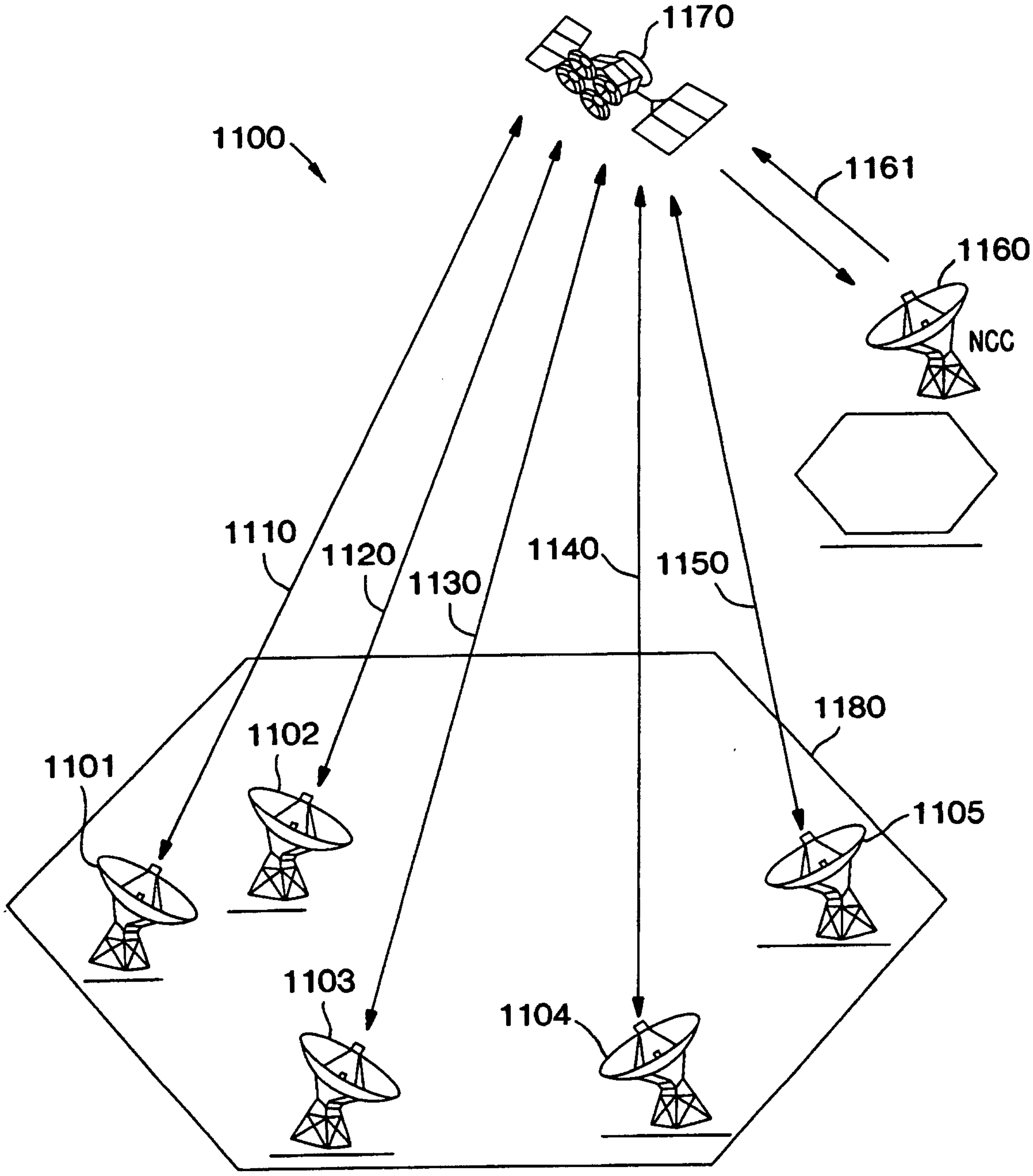
1170
1100
1161
1160
NCC
1110
1120
1130
1140
1150
1180
1101
1102
1103
1104
1105

FIG. 11

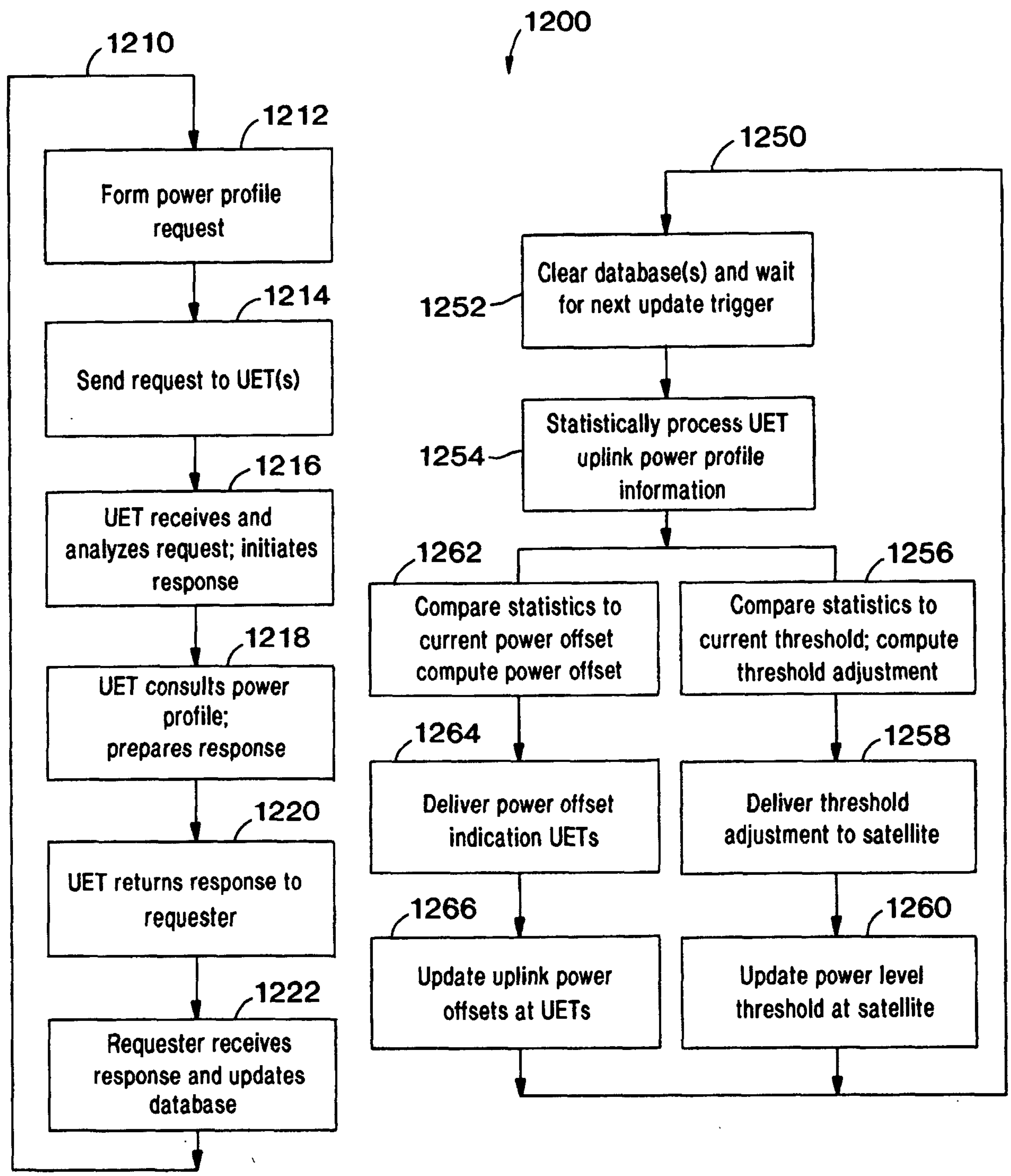
1200
1210
1212
Form power profile request
1214
Send request to UET(s)
1216
UET receives and analyzes request; initiates response
1218
UET consults power profile; prepares response
1220
UET returns response to requester
1222
Requester receives response and updates database
1250
1252
Clear database(s) and wait for next update trigger
1254
Statistically process UET uplink power profile information
1262
Compare statistics to current power offset compute power offset
1256
Compare statistics to current threshold; compute threshold adjustment
1264
Deliver power offset indication UETs
1258
Deliver threshold adjustment to satellite
1266
Update uplink power offsets at UETs
1260
Update power level threshold at satellite

FIG. 12

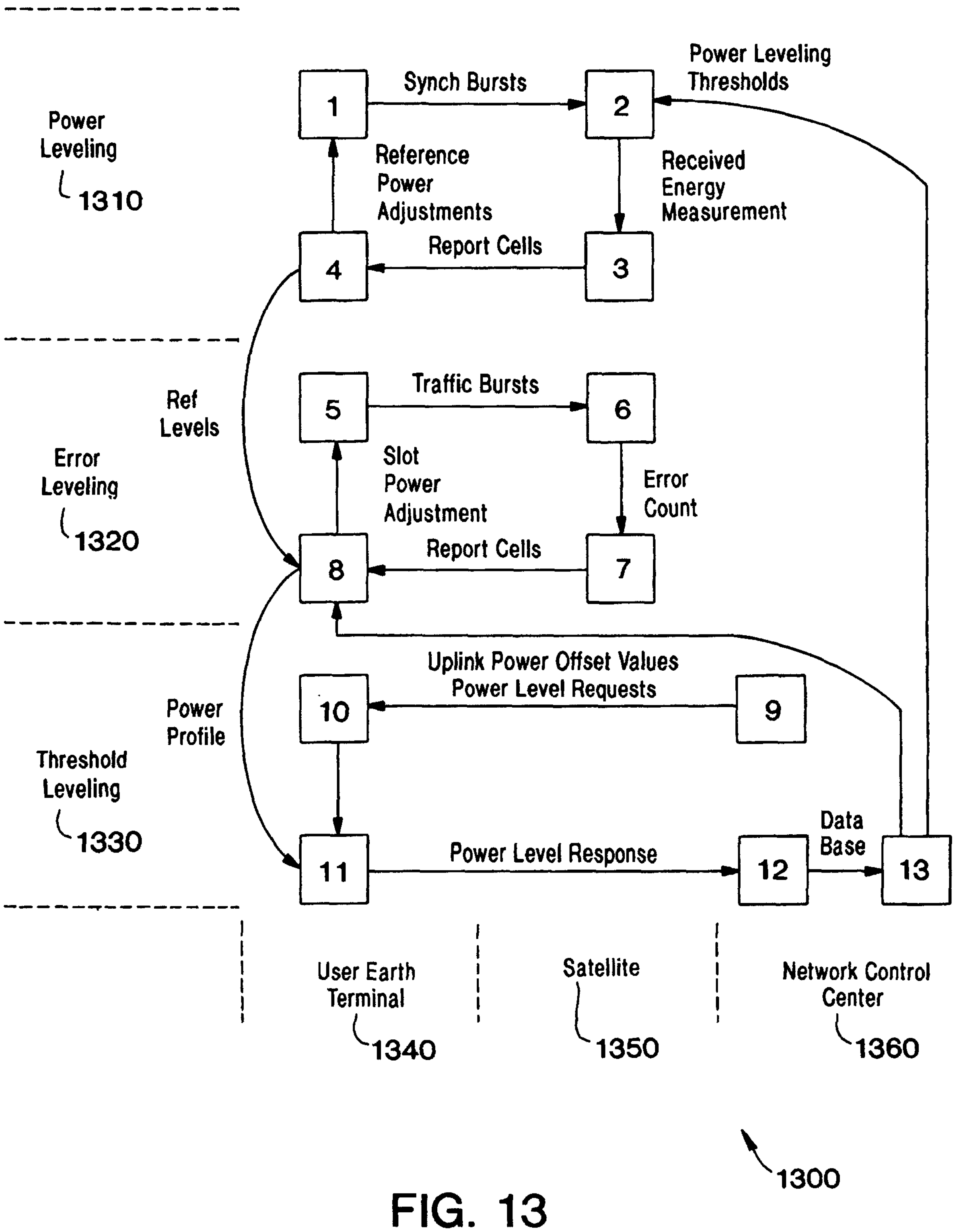
Power Leveling
1310
Error Leveling
1320
Threshold Leveling
1330
1
Synch Bursts
2
Power Leveling Thresholds
Reference Power Adjustments
Received Energy Measurement
4
Report Cells
3
Ref Levels
5
Traffic Bursts
6
Slot Power Adjustment
Error Count
8
Report Cells
7
Uplink Power Offset Values
Power Level Requests
Power Profile
10
9
11
Power Level Response
12
Data Base
13
User Earth Terminal
1340
Satellite
1350
Network Control Center
1360
1300

FIG. 13